(19) **Europäisches Patentamt / European Patent Office / Office européen des brevets**

(11) **EP 4 715 972 A1**

(12) **EUROPEAN PATENT APPLICATION**
published in accordance with Art. 153(4) EPC

(43) Date of publication:
**25.03.2026 Bulletin 2026/13**

(21) Application number: **24871540.1**

(22) Date of filing: **09.08.2024**

(51) International Patent Classification (IPC):
*H01M 50/117* (2021.01)    *C01G 23/00* (2006.01)
*C01G 29/00* (2006.01)    *C04B 35/462* (2006.01)
*H01M 10/052* (2010.01)    *H01M 10/0562* (2010.01)
*H01M 50/11* (2021.01)    *H01M 50/138* (2021.01)
*H01M 50/141* (2021.01)

(52) Cooperative Patent Classification (CPC):
**C01G 23/00; C01G 29/00; C04B 35/462;**
**H01M 10/052; H01M 10/0562; H01M 50/11;**
**H01M 50/117; H01M 50/138; H01M 50/141;**
**Y02E 60/10**

(86) International application number:
**PCT/JP2024/028628**

(87) International publication number:
**WO 2025/069738 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.09.2023 JP 2023161615**

(71) Applicant: **Murata Manufacturing Co., Ltd.**
**Nagaokakyo-shi, Kyoto 617-8555 (JP)**

(72) Inventor: **TAKANO, Ryohei**
**Nagaokakyo-shi, Kyoto 617-8555 (JP)**

(74) Representative: **Reddie & Grose LLP**
**The White Chapel Building**
**10 Whitechapel High Street**
**London E1 8QS (GB)**

(54) **SOLID-STATE BATTERY**

(57) The present invention provides a solid-state battery that is sufficiently excellent in low-temperature densification characteristics and moisture resistance. The present invention relates to the solid-state battery including an exterior portion and an insulating portion, in which at least one of the exterior portion and the insulating portion includes an oxide ceramic containing Li (lithium), Mg (magnesium), one or more elements (M) selected from the group consisting of Group 4 and Group 5 elements, and Bi (bismuth).

EP 4 715 972 A1

## Description

TECHNICAL FIELD

The present invention relates to a solid-state battery.

BACKGROUND ART

In recent years, the demand for batteries as power sources for portable electronic devices such as mobile phones and portable personal computers has been greatly expanded. In batteries used for such applications, an electrolyte (electrolytic solution) such as an organic solvent has been conventionally used as a medium for moving ions. However, a battery having the above configuration has a risk of leakage of the electrolytic solution. In addition, the organic solvent or the like used as the electrolytic solution is a combustible substance. Therefore, it is required to enhance the safety of the battery.

Therefore, in order to enhance the safety of the battery, a solid-state battery using a solid electrolyte as an electrolyte instead of the electrolytic solution has been studied.

For example, Patent Documents 1 to 4 propose a solid-state battery having an exterior portion including an oxide ceramic on an outer surface of a battery element including a positive electrode layer, a negative electrode layer, and a solid electrolyte layer therebetween. In a solid-state battery, for example, an insulating portion is disposed between a positive electrode layer and a negative electrode side external electrode and between a negative electrode layer and a positive electrode side external electrode, and an attempt has been made to include an oxide ceramic in such an insulating portion.

PRIOR ART DOCUMENT

PATENT DOCUMENTS

    Patent Document 1: WO 2019/167856 A
    Patent Document 2: Japanese Patent Application Laid-Open No. 2007-173212
    Patent Document 3: Japanese Patent Application Laid-Open No. 2003-92092
    Patent Document 4: WO 2019/181909 A

SUMMARY OF THE INVENTION

Problem to be solved by the invention

However, in the conventional fixed battery described above, there has been a problem that when firing (for example, 1100°C or more) is performed in the production process thereof, the oxide ceramic included in the exterior portion reacts with the solid electrolyte included in the battery element, the solid electrolyte is decomposed, and a byproduct is generated. Such a problem is particularly remarkable when a highly reactive solid electrolyte having a garnet-type or LISICON-type crystal structure is used.

Therefore, when the exterior portion includes an oxide ceramic containing Li (lithium), Mg (magnesium), and one or more elements (M) selected from the group consisting of Group 4 and Group 5 elements, the reaction can be prevented to some extent, but the preventing effect is not sufficient. For this reason, attempts have been made to more sufficiently prevent the reaction by firing at a relatively low temperature (for example, 1000°C or less), but at such a low temperature, the exterior portion is not sufficiently densified, and thus there has been a new problem that the area porosity increases and the moisture resistance decreases.

On the other hand, also between the oxide ceramic included in the insulating portion and the solid electrolyte included in the battery element (particularly, the solid electrolyte layer), a problem similar to the problem of the reaction between the oxide ceramic included in the exterior portion and the solid electrolyte included in the battery element also occurs as a new problem. Therefore, when the insulating portion includes an oxide ceramic containing Li (lithium), Mg (magnesium), and one or more elements (M) selected from the group consisting of Group 4 and Group 5 elements, the reaction can be prevented to some extent, but the preventing effect is not sufficient. For this reason, as in the case where the oxide ceramic is included in the exterior portion, attempts have been made to more sufficiently prevent the reaction by firing at a relatively low temperature (for example, 1000°C or less), but at such a low temperature, the insulating portion is not sufficiently densified, and thus there has been a new problem that the area porosity increases and the moisture resistance decreases. Although the insulating portion does not directly come into contact with the surrounding environment (for example, air), air may enter through a gap generated in the external electrode, and/or air may enter from a space between the external electrode and the battery element. Therefore, it is important that the insulating portion has moisture resistance. As described above, similarly to the exterior portion, the insulating portion is also required to be densely fired to improve the moisture resistance and to cause no side reaction with the solid electrolyte.

An object of the present invention is to provide a solid-state battery that is sufficiently excellent in low-temperature densification characteristics and moisture resistance.

In addition, an object of the present invention is to provide a solid-state battery more sufficiently excellent not only in low-temperature densification characteristics and moisture resistance but also in reaction resistance.

Means for solving the problem

The present invention relates to a solid-state battery having

an exterior portion and an insulating portion, in which
at least one of the exterior portion and the insulating portion includes an oxide ceramic including:

Li (lithium);
Mg (magnesium);
one or more elements (M) selected from the group consisting of Group 4 and Group 5 elements; and
Bi (bismuth).

Advantageous effect of the invention

The present invention can provide a solid-state battery that is sufficiently excellent in low-temperature densification characteristics and moisture resistance.

Specifically, in the solid-state battery of the present invention, the exterior portion and/or the insulating portion with the area porosity more sufficiently reduced are formed at a relatively low temperature (for example, 1000°C or less (particularly 800°C or less)), and the water vapor transmission rate (WVTR) is sufficiently reduced under high temperature and high humidity.

BRIEF EXPLANATION OF DRAWINGS

FIG. 1 is a schematic view showing an example of a solid-state battery of the present invention, and is a composite view of a perspective view and a sectional view.

FIG. 2 is a schematic perspective view showing another example of a solid-state battery of the present invention.

FIG. 3 is an enlarged schematic view showing an oxide ceramic and the structure thereof for explaining sintered grains constituting an example of the oxide ceramic included in an exterior portion and/or an insulating portion of the solid-state battery of the present invention.

FIG. 4 is a SEM photograph showing a surface of a sintered body (exterior ceramic single plate) obtained in Example 1.

FIG. 5 is a SEM photograph showing a surface of a sintered body (exterior ceramic single plate) obtained in Comparative Example 1.

FIG. 6 is a TEM photograph showing a sintered body (exterior ceramic single plate) obtained in Example 1.

FIG. 7 is an EDX mapping image showing the presence distribution of the Bi element in the TEM photograph shown in FIG. 6.

FIG. 8 shows EDX quantitative analysis results for the arrow-indicated portion of the TEM photograph shown in FIG. 6.

FIG. 9 is a SEM photograph showing a sectional of the sintered body (exterior ceramic single plate) obtained in Example 2.

MODE FOR CARRYING OUT THE INVENTION

[Solid-state battery]

The present invention provides a solid-state battery. The term "solid-state battery" as used herein refers in a broad sense to a battery in which its components (particularly an electrolyte layer) are constituted of solids, and refers in a narrow sense to an "all-solid-state battery" in which its components (particularly all the components) are constituted of solids. In one preferred embodiment, the solid-state battery according to the present invention is a stacked solid-state battery in which the respective layers forming the battery constituent unit are stacked on each other, and preferably each of such layers includes a sintered body. The "solid-state battery" as used herein includes what is called a "secondary battery" capable of repeating charging and discharging, and a "primary battery" capable of discharging only. In one preferred embodiment of the present invention, the "solid-state battery" is a "secondary battery". The "secondary battery" is not excessively limited by its name, and can encompass, for example, an electrochemical device such as a "power storage device". The term "solid electrolyte" as used herein refers to one that includes no gel-like or liquid electrolyte (liquid).

The term "plan view" in the present specification refers to a state (a top view or a bottom view) when an object is viewed from the upper side or the lower side along a thickness direction based on a stacking direction of layers, described later, constituting the solid-state battery. In addition, the "sectional view" as used herein refers to a sectional state (sectional view) when viewed from a direction substantially perpendicular to the thickness direction based on the stacking direction L of the layers, described later, constituting the solid-state battery. The "side view" is a state when the solid-state battery is mounted and viewed from the side of a thickness (height) direction thereof, and means the same as lateral view. The mounting is a mounting when a surface (planar surface) of the maximum area constituting the appearance of the solid-state battery becomes a bottom surface. The "vertical direction" and "horizontal direction" as used directly or indirectly herein correspond to a vertical direction and a horizontal direction in the drawings, respectively. Unless otherwise specified, the same reference signs or symbols shall denote the same members or sites or the same meanings. In a preferred aspect, it can be understood that a downward direction in a vertical direction (that is, a direction in which gravity acts) corresponds to a "downward direction", and an opposite direction corresponds to an "upward direction".

The solid-state battery of the present invention may have any shape in a plan view, and typically has a rectangular shape. The rectangular shape encompasses squares and rectangles.

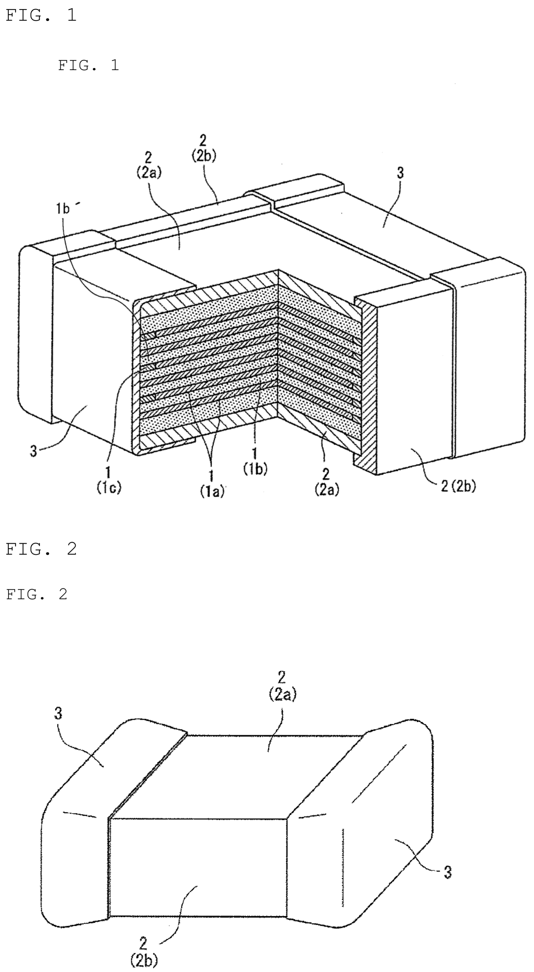

The solid-state battery of the present invention has, for example, a layered structure (particularly, a stacked structure) as shown in FIG. 1. The solid-state battery of the present invention has a battery element 1 and an exterior portion 2 covering a surface of the battery element 1, and typically further has an external electrode 3 for drawing electric power (particularly current) generated in the battery element to the outside. The insulating portion is disposed between the electrode layer (positive electrode layer or negative electrode layer) 1a and the external electrode (negative electrode side or positive electrode side external electrode, respectively) 3, and is a member represented by "1c" in FIG. 1. FIG. 1 is a schematic sectional view showing an example of a solid-state battery of the present invention.

In the solid-state battery of the present invention, at least one of the exterior portion and the insulating portion includes specific oxide ceramics. For example, of the exterior portion and the insulating portion, only the exterior portion may include a specific oxide ceramic, only the insulating portion may include a specific oxide ceramic, or both may include a specific oxide ceramic. In the present invention, from the viewpoint of further improving the low-temperature densification characteristics, moisture resistance, and reaction resistance, it is preferable that at least the exterior portion includes a specific oxide ceramic, and it is more preferable that both the exterior portion and the insulating portion include a specific oxide ceramic. Hereinafter, the solid-state battery of the present invention will be described in detail using a first embodiment and a second embodiment. The present invention encompasses the first embodiment and the second embodiment.

<First embodiment>

The solid-state battery according to the first embodiment of the present invention includes a specific oxide ceramic in at least an exterior portion and the insulating portion. As will be described in detail later, the insulating portion may or may not include the specific oxide ceramic. In the present embodiment, from the viewpoint of further improving the low-temperature densification characteristics, the moisture resistance, and the reaction resistance, it is preferable that both the exterior portion and the insulating portion include a specific oxide ceramic.

(Exterior portion)

The exterior portion 2 is a member covering the outside of the battery element 1, and has a function of covering the battery element 1 to prevent entry of moisture into the battery element 1. The exterior portion 2 typically has not only such a function but also a function of electrically, physically, and chemically protecting a battery element, and thus may also be referred to as a protective layer or a protective film. The exterior portion 2 includes a main surface exterior portion 2a (for example, a set of main surface exterior portions 2a) that covers the main surface of the battery element 1 and a side surface exterior portion 2b (for example, a set of side surface exterior portions 2b) that covers the side surface of the battery element 1. The exterior portion 2 typically has a layer form or a film form. The exterior portion 2 may be in direct contact with the surface (in particular, the main surface and/or the side surface) of the battery element 1, or may be in indirect contact with the surface with another layer (or film) interposed therebetween. From the viewpoint of more sufficiently exhibiting the effect of the present invention, it is preferable that the exterior portion 2 is in direct contact with the surface (particularly, the main surface and/or the side surface) of the battery element 1.

In the solid-state battery of the present embodiment, the exterior portion 2 includes a specific oxide ceramic. In the present embodiment, at least one of the main surface exterior portion and the side surface exterior portion may include a specific oxide ceramic. From the viewpoint of further improving the low-temperature densification characteristics, the moisture resistance, and the reaction resistance, it is preferable that both the main surface exterior portion and the side surface exterior portion include a specific oxide ceramic.

In the present specification, the low-temperature densification characteristic is a characteristic that an exterior portion (and/or an insulating portion) having a more sufficiently reduced area porosity is formed at a relatively low temperature (for example, 1000°C or less (particularly 800°C or lower)).

The moisture resistance is a characteristic of preventing entry of moisture, and may be a characteristic (for example, water vapor barrier properties) in which the water vapor transmission rate (WVTR) is sufficiently reduced particularly under high temperature and high humidity.

The reaction resistance is a characteristic that the exterior portion (and/or the insulating portion) (particularly, the oxide ceramics included in the exterior portion (and/or the insulating portion)) is less likely to react (for example, side reaction) when fired (for example, fired at 800°C for 5 hours) with the solid electrolyte included in the battery element. The reaction resistance may be a characteristic that the oxide ceramic and the solid electrolyte hardly react with each other particularly when fired together.

In the present embodiment, the oxide ceramic included in the exterior portion is Li (lithium); Mg (magnesium); one or more elements (M) selected from the group consisting of Group 4 and Group 5 elements; and Bi (bismuth). Specifically, the element M is one or more elements selected from the group consisting of Ti (titanium), Zr (zirconium), Hf (hafnium), Ta (tantalum), and Nb (niobium). From the viewpoint of further improving the low-temperature densification characteristics, moisture resistance, and reaction resistance, the element M is preferably at least one selected from Ti, Ta, and Nb, or two selected from Zr and Ta. In the present embodiment, the oxide ceramic contains Li, Mg, the element M, and Bi in combination, thereby allowing an exterior portion excellent in low-temperature densification characteristics and moisture resistance to be obtained. When the oxide ceramic does not include any one or more elements of Li, Mg, element M, and Bi, the low-temperature densification characteristics are deteriorated, and as a result, the moisture resistance is also deteriorated.

In the oxide ceramic, the molar ratio Bi/ (Mg + M) is not particularly limited, and is preferably within the following range from the viewpoint of further improving the low-temperature densification characteristics, moisture resistance, and reaction resistance.

.

$$Bi/(Mg+M)$$

preferably, $0 < Bi/ (Mg + M) \leq 0.100$;
more preferably, $0.001 \leq Bi/ (Mg + M) \leq 0.080$;
further preferably, $0.004 \leq Bi/ (Mg + M) \leq 0.060$; and
sufficiently preferably $0.005 \leq Bi/ (Mg + M) \leq 0.040$.

In the oxide ceramic, the molar ratios Li/M and Mg/M are not particularly limited, and are preferably within the following range from the viewpoint of further improving the low-temperature densification characteristics, moisture resistance, and reaction resistance.

.

$$Li/M$$

preferably, $0 < Li/M \leq 5$;
more preferably, $1.0 \leq Li/M \leq 4.0$;
further preferably, $1.5 \leq Li/M \leq 3.5$; and
sufficiently preferably, $1.9 \leq Li/M \leq 3.0$.

.

$$Mg/M$$

preferably, 0 < Mg/M ≤ 9.8;
more preferably, 0.01 ≤ Mg/M ≤ 7.0;
further preferably, 0.05 ≤ Mg/M ≤ 6.0; and
sufficiently preferably 0.08 ≤ Mg/M ≤ 4.2.

As Bi/ (Mg + M), Li/M, and Mg/M in the oxide ceramic, there are used values obtained by calculating from the contents (or molar ratio) of Li, Mg, M, and Bi measured by the same method as the method for analyzing the chemical composition of the oxide ceramic described later.

The content of Mg in the oxide ceramic is typically 0 mass% or more and 58 mass% or less, and is particularly 1.9 mass% or more and 46 mass% or less with respect to the total amount of the oxide ceramic.

As the content of Mg, a value measured by emission spectroscopy using high-frequency inductively coupled plasma (ICP) as a light source is used. For example, ICP-AES (ICP emission spectrometry) may be used, or LA-ICP-MS (laser ablation ICP mass spectrometry) may be used. Specifically, ICP-AES and LA-ICP-MS are different from each other in terms of whether to form a solution or to use laser ablation in ionizing metal ions such as Mg, and are the same in that these ions are introduced into plasma and excited by plasma. In particular, in analysis from a solid state, LA-ICP-MS contributes to simple measurement. In particular, in the case of LA-ICP-MS, quantitative analysis (composition analysis) may be performed at any 10 or more locations, and an average value thereof may be calculated.

The oxide ceramic may have any chemical composition as long as it has the above molar ratio. From the viewpoint of further improving the low-temperature densification characteristics, the moisture resistance, and the reaction resistance, the oxide ceramic preferably has a chemical composition represented by the following general formula (1).
[Chemical Formula 1]

$$\text{Li}_{\alpha 1}\text{A}_{\alpha 2}\text{Mg}_{\beta}\text{M}_{\gamma}\text{Bi}_{x}\text{O}_{\delta} \qquad (1)$$

In the formula (1), A is one or more elements selected from the group consisting of Na, K, Rb, Ca, Sr, Ba, Sc, Y, Mo, W, Zn, Al, Ga, Ge, Sn, and Sb.

M is one or more elements selected from the same group as the element M described above, and from the viewpoint of further improving the low-temperature densification characteristics, moisture resistance, and reaction resistance), M preferably contains one or more elements selected from the group consisting of Ti, Zr, Nb, and Ta, more preferably at least one element selected from Ti, Ta, and Nb, or two elements of Zr and Ta, and further more preferably contains only Ti.

In the formula (1), $x/(\beta + \gamma)$, $\alpha 1/\gamma$, and $\beta/\gamma$ correspond to the above-described molar ratios Bi/ (Mg + M), Li/M, and Mg/M, respectively. Therefore, Bi/ (Mg + M) satisfies the same range as the molar ratio Bi/ (Mg + M) described above, and from the viewpoint of further improving the low-temperature densification characteristics, the moisture resistance, and the reaction resistance, Bi/ (Mg + M) preferably satisfies the preferable range of Bi/ (Mg + M), more preferably satisfies the more preferable range of Bi/ (Mg + M), further preferably satisfies the further more preferable range of Bi/ (Mg + M), and sufficiently more preferably satisfies the sufficiently preferable range of Bi/ (Mg + M). $\alpha 1/\gamma$ satisfies the same range as the above-described molar ratio Li/M, and from the viewpoint of further improving the low-temperature densification characteristics, moisture resistance, and reaction resistance, $\alpha 1/\gamma$ preferably satisfies the preferable range of Li/M, more preferably satisfies the more preferable range of Li/M, further preferably satisfies the further preferable range of Li/M, and sufficiently preferably satisfies the sufficiently preferable range of Li/M. $\beta/\gamma$ satisfies the same range as the above-described molar ratio Mg/M, and from the viewpoint of further improving the low-temperature densification characteristics, moisture resistance, and reaction resistance, $\beta/\gamma$ preferably satisfies the preferable range of Mg/M, more preferably satisfies the more preferable range of Mg/M, further preferably satisfies the further preferable range of Mg/M, and sufficiently preferably satisfies the sufficiently preferable range of Mg/M.

In the formula (1), $\delta$ satisfies the following formula:

$$\delta \ = \ \{\alpha 1 + a\alpha 2 + 2\beta + n\gamma + bx\}/2$$

(n is an average valence of M, a is an average valence of A, and b is an average valence of Bi)

Specifically, n is the average valence of M. The average valence of M is, for example, a value represented by $(n1 \times a + n2 \times b + n3 \times c)/(n1 + n2 + n3)$ when the number of elements X having a valence of a+ is n1, the number of elements Y having a valence of b+ is n2, and the number of elements Z having a valence of c+ is n3 in the elements represented by M.

a is an average valence of A. The average valence of A is, for example, a value represented by $(n1 \times a + n2 \times b + n3 \times c)/(n1 + n2 + n3)$ when the number of elements X having a valence of a+ is n1, the number of elements Y having a valence of b+ is n2, and the number of elements Z having a valence of c+ is n3 in the elements represented by A.

b is an average valence of Bi, and generally has a value of $3 \leq b \leq 5$. Bi is typically present at a grain boundary (second phase), a main phase (first phase), or both of these phases of the oxide ceramic as described later. When a so-called main phase of the sintered grains is referred to as a "first phase", a grain boundary generated between adjacent main phases may be referred to as a "second phase". The valence of Bi changes according to the existence form (or existence position) of Bi. Specifically, for example, when Bi exists at the grain boundary, the valence of Bi is often "3". For example, when Bi exists in the main phase, the valence of Bi is often "5". Therefore, the average valence of Bi is a value represented by $(n1 \times 3 + n2 \times 5)/(n1 + n2)$ when, for example, $n1$ Bi is recognized as a valence of 3 at the grain boundary in a number of $n1$ and Bi is recognized as a valence of 5 at the main phase in a number of $n2$.

The oxygen number $\delta$ may be deviated from the above value by approximately $\pm 10\%$. That is, oxygen deficiency or interstitial oxygen may be included in part.

In the formula (1), $\alpha 1$ typically satisfies $0 < \alpha 1 < 1.0$, and from the viewpoint of further improving the low-temperature densification characteristics, moisture resistance, and reaction resistance, preferably satisfies $0.10 \leq \alpha 1 \leq 0.80$, and more preferably satisfies $0.20 \leq \alpha 1 \leq 0.70$.

$\alpha 2$ typically satisfies $0 \leq \alpha 2 \leq 1.0$, and from the viewpoint of further improving the low-temperature densification characteristics, moisture resistance, and reaction resistance, preferably satisfies $0 \leq \alpha 2 \leq 0.5$, more preferably satisfies $0 \leq \alpha 2 \leq 0.1$, and further more preferably 0.

$\beta$ typically satisfies $0 < \beta < 1.0$, and from the viewpoint of further improving the low-temperature densification characteristics, moisture resistance, and reaction resistance, preferably satisfies $0.01 \leq \beta \leq 0.80$, and more preferably satisfies $0.01 \leq \beta \leq 0.60$.

$\gamma$ typically satisfies $0 < \gamma < 1.0$, and from the viewpoint of further improving the low-temperature densification characteristics, moisture resistance, and reaction resistance, preferably satisfies $0.05 \leq \gamma \leq 0.50$, and more preferably satisfies $0.10 \leq \gamma \leq 0.40$.

x typically satisfies $0 < x < 1.0$, and from the viewpoint of further improving the low-temperature densification characteristics, moisture resistance, and reaction resistance, preferably satisfies $0.001 \leq x \leq 0.050$, and more preferably satisfies $0.002 \leq x \leq 0.030$.

The chemical composition of the oxide ceramic can be determined by ICP analysis (inductively coupled plasma method), LA-ICP-MS (laser ablation ICP mass spectrometry) analysis, or the like. EDX (energy dispersive X-ray spectroscopy) or WDX (wavelength dispersive X-ray spectroscopy) may be used. In the case of EDX or WDX, the chemical composition may be obtained by performing quantitative analysis (composition analysis) at arbitrary 100 points of each of arbitrary 100 sintered grains and calculating the average of the resulting values.

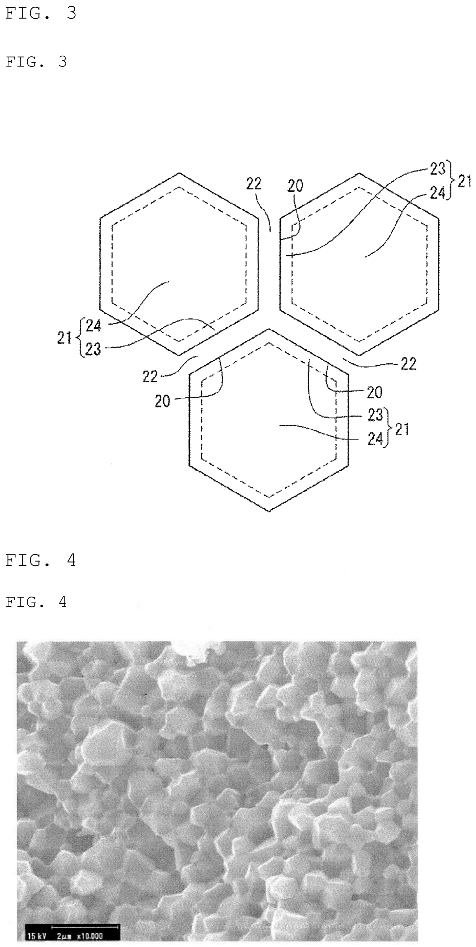

As shown in FIG. 3, the oxide ceramic is typically composed of a main phase (that is, a first phase) 21 of a plurality of sintered grains and a grain boundary (that is, a second phase) 22 disposed between two adjacent main phases 21. In such an oxide ceramic, the main phase 21 includes a grain boundary vicinity portion 23 close to the grain boundary 22 and an inner portion 24 disposed inside the grain boundary vicinity portion 23. The grain boundary vicinity portion 23 is a region (that is, in FIG. 3, the grain boundary vicinity region from the grain boundary line 20 to the broken line) in which the distance from the boundary line 20 on the grain boundary 22 (that is, the distance from the boundary line 20 toward the inner portion 24) is 50 nm or less. The grain boundary 22 is a region between two adjacent main phases 21. The grain boundary 22 does not necessarily have to have a phase (particularly the second phase). FIG. 3 is an enlarged schematic view showing an oxide ceramic and the structure thereof for explaining sintered grains constituting an example of the oxide ceramic included in an exterior portion (and/or an insulating portion) of the solid-state battery of the present invention. In FIG. 3, only the main phase 21 of three sintered grains is illustrated, but typically many sintered grains are present around them while forming grain boundaries with the sintered grains adjacent to each other.

In the present invention, in such an oxide ceramic, Bi has any of the following existence forms.

(x1) Bi exists only at the grain boundary (second phase) 22 of the oxide ceramic; in this case, Bi may be present in the main phase (first phase) 21 in an amount less than a detection limit value by analysis under a predetermined apparatus and condition;

(x2) Bi exists only in the main phase (first phase) 21 of the oxide ceramic; in this case, Bi may be present at the grain boundary (second phase) 22 in an amount less than the detection limit value by analysis under a predetermined apparatus and condition;

(x3) Bi exists in both the grain boundary (second phase) 22 and the main phase (first phase) 21 of the oxide ceramic.

Bi is preferably contained in the oxide ceramic in the form of being present at least at a grain boundary (second phase) (for example, the existence form (x1) or (x3) (in particular the existence form (x3))) from the viewpoint of further improving the low-temperature densification characteristics, moisture resistance, and reaction resistance. In one embodiment, Bi is enriched at the grain boundary and/or in the grain boundary vicinity portion of the oxide ceramic. The enrichment means that the concentration is higher. For example, the concentration of Bi at the grain boundary 22 and/or the grain boundary vicinity portion 23 of the oxide ceramic is higher than the concentration of Bi in the inner portion 24 disposed inside the grain boundary vicinity portion 23.

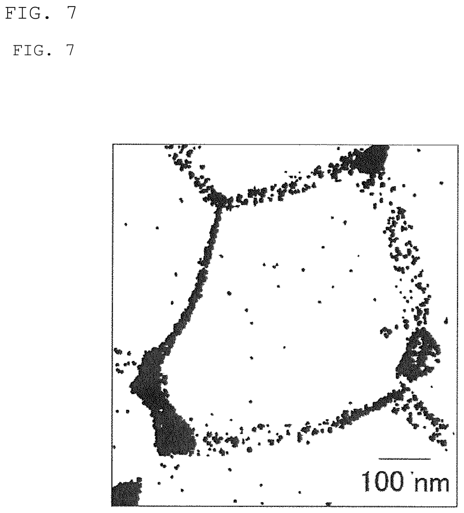

The presence or absence of Bi at the grain boundary (second phase) and the main phase (first phase) in such an oxide ceramic can be determined based on the presence distribution of the Bi element in EDX mapping (300,000 to 2 million fold), as shown in FIG. 7 described later, by TEM-EDX observation. In FIG. 7, it is clear that Bi is enriched at the grain boundary (or the grain boundary and the grain boundary vicinity portion) of the oxide ceramic.

For example, when Bi is detected at the grain boundary in the presence distribution of the Bi element, the presence of Bi is identified. In contrast, when Bi is not detected at the grain boundary in the presence distribution of the Bi element, the absence of Bi is recognized.

In addition, for example, when Bi is detected at the main phase in the presence distribution of the Bi element, the presence of Bi is identified. In contrast, when Bi is not detected at the main phase in the presence distribution of the Bi element, the absence of Bi is recognized.

The determination of "present" or "absent" depends on the resolution in a predetermined analysis method, and is not absolute "presence" or "absence". Thus, in the case of "absent", it is acceptable to include amounts below the limit of detection as determined by analysis with a predetermined apparatus and condition.

· TEM-EDX

TEM apparatus: JEOL JEM-F200
EDX detector: EX-24390UBN5T
EDX system: Noran system 7
Measurement conditions: Bi is detected when EDX is performed at an acceleration voltage of 200 kV using a sample peeled at a thickness of 100 nm or less and measurement is performed under conditions where the count of Mg $K\alpha$ is 550,000 or more in each visual field of 666 nm.

When the exterior portion includes not only an oxide ceramic but also a firing aid, for example, the grain boundary (second phase) 22 is mainly composed of the firing aid. In addition, for example, when the exterior portion is composed of an oxide ceramic and includes no firing aid, the grain boundary (second phase) 22 is formed by exudation of components from the oxide ceramic. In any of these cases, the grain boundary (second phase) 22 is preferably composed of at least one element selected from the group consisting of Li, Mg, and M in addition to Bi from the viewpoint of further improving the low-temperature densification characteristics, the moisture resistance, and the reaction resistance.

The crystal structure of the oxide ceramic is not particularly limited, and may have, for example, a rock salt type crystal structure, a spinel type crystal structure, a layered rock salt type crystal structure, or a mixed phase structure thereof. The oxide ceramic preferably has a rock salt type crystal structure or a layered rock salt type crystal structure (particularly, only a rock salt type crystal structure or a layered rock salt type crystal structure), and more preferably has a rock salt type crystal structure, from the viewpoint of further improving the low-temperature densification characteristics, the moisture resistance, and the reaction resistance. The crystal structure may be a crystal structure of the main phase.

The crystal structure can be detected and sensed by the following analysis apparatus and analysis conditions.

· X-ray diffraction apparatus

Analysis apparatus: D2 PHASER manufactured by Bruker Corporation
Analysis conditions: Cu $K\alpha$ radiation; $2\theta$ = 10 to 60°; step size 0.02°/sec.

For example, the fact that the oxide ceramic has only the rock salt type crystal structure means that, in particular, the main phase (in particular, the inner portion 24) of the oxide ceramic has only the rock salt type crystal structure, and does not substantially include a crystal structure other than the rock salt type crystal structure. The fact that the main phase has only the rock salt type crystal structure means that "among the peaks detected in the oxide ceramic, peaks other than the peak derived from the second phase and the peak caused by the rock salt type structure are not substantially observed", that is, that "the oxide ceramic is composed only of the crystal structure of the second phase and the rock salt type crystal structure". In this case, when the crystal structure of the oxide ceramic is analyzed with the analysis apparatus and the analysis conditions described above, only the rock salt type crystal structure and the crystal structure of the second phase are detected, and crystal structures other than these crystal structures are not detected. Crystal structures other than these crystal structures may be included in an amount less than a detection limit value by analysis under the apparatus and conditions. In addition, in this case, the crystal structure of the second phase may be detected or may not be detected.

In addition, for example, the fact that the oxide ceramic has only the layered rock salt type crystal structure means that, in particular, the main phase (in particular, the inner portion 24) of the oxide ceramic has only the layered rock salt type crystal structure, and does not substantially include a crystal structure other than the layered rock salt type crystal structure. The fact that the main phase has only the layered rock salt type crystal structure means that "among the peaks detected in the oxide ceramic, peaks other than the peak derived from the second phase and the peak caused by the layered rock salt type structure are not substantially observed", that is, that "the oxide ceramic is composed only of the crystal structure of the second phase and the layered rock salt type crystal structure". In this case, when the crystal structure of the oxide ceramic is analyzed with the analysis apparatus and the analysis conditions described above, only the layered rock salt type crystal structure and the crystal structure of the second phase are detected, and crystal structures other than these crystal structures are not detected. Crystal structures other than these crystal structures may be included in an amount less than a detection limit value by analysis under the apparatus and conditions. In addition, in this case, the crystal structure of the second phase may be detected or may not be detected.

The fact that the oxide ceramic has a rock salt type crystal structure means that the oxide ceramic has not only a "crystal structure of a rock salt type" but also a "crystal structure resembling a rock salt type". Specifically, the oxide ceramic has a crystal structure that can be recognized as a crystal structure of a rock salt type or resembling a rock salt type by those skilled in the art of solid-state batteries in X-ray diffraction. More specifically, the oxide ceramic may show, in X-ray diffraction, one or more main peaks corresponding to a Miller index unique to a crystal structure of a so-called rock salt type, diffraction pattern: ICDD Card No. 00-004-0829, at a predetermined incident angle, or may show one or more main peaks having different incident angles (that is, peak positions or diffraction angles) and intensity ratios (that is, peak intensities or diffraction intensity ratios) due to a difference in composition from one or more main peaks corresponding to a Miller index unique to a crystal structure of a so-called rock salt type as a crystal structure resembling a rock salt type. Examples of a typical diffraction pattern of a crystal structure resembling a rock salt type include ICDD Card No. 00-036-0308.

The fact that the oxide ceramic has a spinel type crystal structure means that the oxide ceramic has not only a "crystal structure of a spinel type" but also a "crystal structure resembling a spinel type". Specifically, the oxide ceramic has a crystal structure that can be identified as a crystal structure of a spinel type or resembling a spinel type by those skilled in the field of solid-state batteries in X-ray diffraction. More specifically, the oxide ceramic may show, in X-ray diffraction, one or more main peaks corresponding to a Miller index unique to a crystal structure of a so-called spinel type (diffraction pattern: ICDD Card No. 01-072-6998) at a predetermined incident angle, or may show one or more main peaks having different incident angles (that is, peak positions or diffraction angles) and intensity ratios (that is, peak intensities or diffraction intensity ratios) due to a difference in composition from one or more main peaks corresponding to a Miller index unique to a crystal structure of a so-called spinel type as a crystal structure resembling a spinel type.

The fact that the oxide ceramic has the mixed phase structure of a rock salt type crystal structure and a spinel type crystal structure means that the oxide ceramic contains an oxide ceramic having both crystal structures of the rock salt type crystal structure and the spinel type crystal structure described above.

The fact that the oxide ceramic has a layered rock salt type crystal structure means that the oxide ceramic has not only a "crystal structure of a layered rock salt type" but also a "crystal structure resembling a layered rock salt type". Specifically, the oxide ceramic has a layered crystal structure that can be recognized as a crystal structure of a layered rock salt type or resembling a layered rock salt type by those skilled in the art of solid-state batteries in X-ray diffraction. More specifically, the oxide ceramic may show, in X-ray diffraction, one or more main peaks corresponding to a Miller index unique to a crystal structure of a so-called layered rock salt type, diffraction pattern: ICDD Card No. 00-033-0831, at a predetermined incident angle, or may show one or more main peaks having different incident angles (that is, peak positions or diffraction angles) and intensity ratios (that is, peak intensities or diffraction intensity ratios) due to a difference in composition from one or more main peaks corresponding to a Miller index unique to a crystal structure of a so-called layered rock salt type as a crystal structure resembling a layered rock salt type. Examples of a typical diffraction pattern of a crystal structure resembling a layered rock salt type include ICDD Card No. 00-033-0843.

The oxide ceramic may be produced by any method as long as an oxide ceramic having a desired composition can be obtained, and examples thereof include the following methods (1) and (2).

Method (1): First, raw materials including a Li source, a Mg source, and an element M source are weighed such that a predetermined element has a desired composition (molar ratio), and sufficiently mixed with water and fired (first firing step). Then, the obtained fired product is weighed together with a Bi-containing firing aid as a Bi source such that a predetermined element is included in a desired composition (molar ratio), and sufficiently mixed together with an alcohol and a binder. Thereafter, the obtained slurry is molded into a sheet shape and fired to obtain an oxide ceramic constituting the exterior portion (second firing step). The Bi-containing firing aid is preferably an oxide containing Bi, and more preferably an oxide containing Bi and Li. Specific examples of the Bi-containing firing aid include $LiBiO_2$ and $Li_3BiO_3$.

Method (2): The oxide ceramic can be obtained by weighing raw materials including a Li source, a Mg source, an element M source, and a Bi source such that predetermined elements are included in a desired composition (molar ratio), sufficiently mixing the raw materials with water, and then firing the raw materials (firing step).

The firing temperatures in the first firing step in the method (1) and the firing step in the method (2) are not particularly limited, and may be, for example, 800°C or more and 1200°C or less (particularly, 850°C or more and 1100°C or less). The firing time is not particularly limited, and may be, for example, 1 hour or more and 10 hours or less (particularly 3 hours or more and 7 hours or less).

The firing temperature and the firing time in the second firing step in the method (1) are similar to those in the "firing step" in the "method for producing a solid-state battery" described later.

As a Li source, for example, lithium carbonate ($Li_2CO_3$) can be used. As a Mg source, for example, magnesium oxide (MgO) can be used. As an element M source, for example, titanium oxide ($TiO_2$), niobium oxide ($Nb_2O_5$), zirconium oxide ($ZrO_2$), tantalum oxide ($Ta_2O_5$), and hafnium oxide ($HfO_2$) can be used. As a Bi source, for example, $Bi_2O_3$ can be used. In the production of the oxide ceramic, the final composition of the obtained oxide ceramic is almost determined as the ratio of the Li source, Mg source, and element M source during charging. Therefore, the molar ratios x/ ($\beta + \gamma$), Li/M ($\alpha1/\gamma$), and Mg/M ($\beta/\gamma$) can be controlled by adjusting the charging ratios of the Li source, the Mg source, the element M source, and the Bi source.

The present embodiment does not preclude the exterior portion 2 from including another oxide ceramic in addition to the specific oxide ceramic described above. Examples of other oxide ceramics include Li-Bi-O-based oxides, Li-Mg-Bi-O-based oxides, $Bi_2O_3$, Mg-Bi-O-based oxides, Li-M-O-based oxides (wherein M is the same as M in the formula (1)), Li-Bi-M-O-based oxides (wherein M is the same as M in the formula (1)), and MgO. The content of the specific oxide ceramic in the exterior portion 2 may typically be an area percentage of 60% or more and 100% or less, and may particularly be an area percentage of 90% or more and 100% or less. The area percentage can be measured as follows. First, a solid-state battery is broken such that the broken surface of the ceramic exterior portion is exposed. This broken surface is polished using a cross section polisher or the like to provide a polished surface. EDX analysis is performed on any surface in the region of the exterior portion of the polished surface, and the region in which not only Mg, element M, and element A are detected but also Li is detected by TOF-SIMS is regarded as the region of the specific oxide ceramic described above. As described above, the measurement is possible by calculating the percentage of the area of the oxide ceramic to the area of the exterior portion.

The exterior portion 2 may or may not include a firing aid. Examples of the firing aid that may be included in the exterior portion include the Bi-containing firing aid described above, and firing aids that may be included in the positive electrode layer and the negative electrode layer described later. From the viewpoint of further improving the low-temperature densification characteristics, moisture resistance, and reaction resistance, it is preferable that the exterior portion 2 does not include a firing aid other than the Bi-containing firing aid.

The thickness of the exterior portion 2 is typically preferably 1 $\mu$m or more and 500 $\mu$m or less, is more preferably 5 $\mu$m or more and 100 $\mu$m or less, and is further more preferably 5 $\mu$m or more and 50 um or less. As the thickness of the exterior portion 2, an average thickness for the thickness at arbitrary 100 positions is used.

The relative density of the exterior portion 2 is typically 90% or more and 100% or less, and is preferably 95% or more and 100% or less. The relative density of the exterior portion may be measured using the Archimedes method.

The exterior portion 2 typically has insulating properties. The insulating properties are properties having neither ion conductivity nor electron conductivity. For example, the ion conductivity of the exterior portion 2 is typically $1 \times 10^{-7}$ S/cm or less, and particularly the ion conductivity is $1 \times 10^{-10}$ S/cm or less. The ion conductivity of the exterior portion 2 is typically $1 \times 10^{-18}$ S/cm or more. For example, the electron conductivity of the exterior portion 2 is typically $1 \times 10^{-7}$ S/cm or less, particularly $1 \times 10^{-10}$ S/cm or less. The electron conductivity of the exterior portion 2 is typically $1 \times 10^{-18}$ S/cm or more.

The oxygen permeability of the exterior portion 2 in the thickness direction may be, for example, $10^{-1}$ cc/m$^2$/day/atmospheric pressure or less, particularly $10^{-3}$ cc/m$^2$/day/atmospheric pressure or less.

$H_2O$ permeability in the thickness direction of the exterior portion 2 may be, for example, $10^{-2}$ g/m$^2$/day or less, particularly $10^{-4}$ g/m$^2$/day or less. As the $H_2O$ permeability, a value measured at 25°C by a cup method, a carrier gas method, a pressure application method, or a Ca corrosion method is used.

The main surface exterior portion 2a and the side surface exterior portion 2b have a form as separate members from each other (or a separate member structure) in FIG. 1, but may have a form in which the main surface exterior portion 2a and the side surface exterior portion 2b are integrated (or an integrated structure) as illustrated in FIG. 2. FIG. 2 is a schematic perspective view showing another example of a solid-state battery of the present invention. The solid-state battery of FIG. 2 is the same as the solid-state battery of FIG. 1 except that the main surface exterior portion 2a and the side surface exterior portion 2b are integrated. In the solid-state battery of FIG. 2, not only the main surface exterior portion 2a but also the side surface exterior portion 2b can be produced by using a later-described method of sticking a sheet (green sheet method). In particular, by producing the solid-state battery (in particular, the exterior portion 2) using a sheet in which a sheet corresponding to the main surface exterior portion 2a and a sheet corresponding to the side surface exterior portion 2b are continuous, production of the solid-state battery (in particular, the exterior portion 2) is significantly simplified. In this case, the oxide ceramic included in the main surface exterior portion 2a typically has the same chemical composition as the oxide ceramic included in the side surface exterior portion 2b.

When in direct contact with the surface (particularly the main surface and/or the side surface) of the battery element 1, the exterior portion 2 is preferably integrally sintered as sintered bodies together with the surface. That is, it is preferable that the exterior portion 2 is an integrally sintered body as sintered bodies together with the surface (particularly,

the main surface and/or the side surface) of the battery element 1. The fact that the exterior portion 2 is integrally sintered as sintered bodies together with the surface of the battery element 1 means that the exterior portion 2 and the battery element 1 are joined by sintering. Specifically, the exterior portion 2 and the battery element 1 are sintered integrally while both being a sintered body. Not the whole of the exterior portion 2 and the battery element 1 need to be strictly integrated, and a part thereof does not have to be integrated. It is sufficient that the exterior portion 2 and the battery element 1 are integrated as a whole.

(Battery element)

The battery element 1 is a body portion of a solid-state battery covered with the exterior portion 2, and includes one or more battery constituent units. The battery constituent unit means a minimum constituent unit capable of exhibiting a battery function, and includes a set of electrode layers 1a (specifically, one positive electrode layer and one negative electrode layer facing each other) and one solid electrolyte layer 1b disposed between the set of electrode layers 1a (that is, between the positive electrode layer and the negative electrode layer). The battery element 1 may have a single battery structure having only one battery constituent unit, or may have a multi-battery structure in which two or more battery constituent units are stacked along a stacking direction of each layer constituting each battery constituent unit. The electrode layer includes the positive electrode layer and the negative electrode layer. The battery element 1 typically has an insulating portion 1c for ensuring electrical non-contact between one electrode layer and an external electrode for drawing current from the other electrode layer to the outside. For example, the battery element 1 is disposed between a positive electrode layer and an external electrode (that is, a negative electrode side external electrode) for drawing a current from the negative electrode layer to the outside, and has an insulating portion 1c for ensuring electrical non-contact therebetween. In addition, for example, the battery element 1 is disposed between a negative electrode layer and an external electrode (that is, a positive electrode side external electrode) for drawing a current from the positive electrode layer to the outside, and has an insulating portion 1c for ensuring electrical non-contact therebetween. As shown in FIG. 1, the battery element typically has a solid electrolyte layer 1b on the top layer and bottom layer of the battery element.

The insulating portion may or may not include the specific oxide ceramic described above. In the present embodiment, from the viewpoint of further improving the low-temperature densification characteristics, the moisture resistance, and the reaction resistance, it is preferable that both the exterior portion and the insulating portion include a specific oxide ceramic.

When the insulating portion includes the specific oxide ceramic described above, unless otherwise specified, the description of the insulating portion may be applied by replacing the "exterior portion" with the "insulating portion". Therefore, the oxide ceramic included in the insulating portion may be selected from the same range as the oxide ceramic included in the exterior portion described above. The specific oxide ceramic included in the insulating portion and the specific oxide ceramic included in the exterior portion may be each independently selected. The preferred oxide ceramic included in the insulating portion may be selected from the same range as the preferred oxide ceramic included in the exterior portion described above.

The insulating portion typically has a thickness similar to the thickness of the positive electrode layer or the negative electrode layer. The thickness of the insulating portion is preferably 1 $\mu$m or more and 500 $\mu$m or less, is more preferably 5 $\mu$m or more and 100 $\mu$m or less, and is further more preferably 5 $\mu$m or more and 50 $\mu$m or less. As the thickness of the insulating portion, an average thickness for the thickness at arbitrary 100 positions is used.

The relative density of the insulating portion is typically 90% or more and 100% or less, and is preferably 95% or more and 100% or less. The relative density of the insulating portion may be measured using the Archimedes method.

The insulating portion has insulating properties and has neither ion conductivity nor electron conductivity. For example, the ion conductivity of the insulating portion is typically $1 \times 10^{-7}$ S/cm or less, particularly $1 \times 10^{-10}$ S/cm or less. The ion conductivity of the insulating portion is typically $1 \times 10^{-18}$ S/cm or more. For example, the electron conductivity of the insulating portion is typically $1 \times 10^{-7}$ S/cm or less, particularly $1 \times 10^{-10}$ S/cm or less. The electron conductivity of the insulating portion is typically $1 \times 10^{-18}$ S/cm or more.

The oxygen permeability of the insulating portion in the thickness direction may be, for example, $10^{-1}$ cc/m$^2$/day/atmospheric pressure or less, particularly $10^{-3}$ cc/m$^2$/day/atmospheric pressure or less.

$H_2O$ permeability in the thickness direction of the insulating portion may be, for example, $10^{-2}$ g/m$^2$/day or less, particularly $10^{-4}$ g/m$^2$/day or less. As the $H_2O$ permeability, a value measured at 25°C by a cup method, a carrier gas method, a pressure application method, or a Ca corrosion method is used.

When the insulating portion does not include the specific oxide ceramic described above, the insulating portion may be composed of any oxide ceramic known in the field of solid-state batteries. The insulating portion may be similar to the insulating portion described above except that the insulating portion is composed of, for example, oxide ceramics similar to "other oxide ceramics" described in the description of the exterior portion.

The insulating portion includes an insulating portion disposed between the positive electrode layer and the negative electrode side external electrode, and an insulating portion disposed between the negative electrode layer and the positive electrode side external electrode. The insulating portion typically has a layer form or a film form. The insulating portion may be disposed between two solid electrolyte layers, and may be in direct contact with a surface (particularly a part of a main surface) of each of the two solid electrolyte layers, or may be in indirect contact with the same via another layer (or a film). From the viewpoint of more sufficiently exerting the effect of the present invention, it is preferable that the insulating portion is disposed between the two solid electrolyte layers and is in direct contact with the surface (particularly, a part of the main surface) of each of the two solid electrolyte layers.

When the insulating portion is disposed between the two solid electrolyte layers and is in direct contact with the surface (particularly, a part of the main surface) of each of the two solid electrolyte layers, the insulating portion and the surfaces of the two solid electrolyte layers are preferably integrally sintered. That is, it is preferable that the insulating portion is an integrally sintered body of sintered bodies of the insulating portion and the surface (particularly, a part of the main surface) of each of the two solid electrolyte layers. The fact that the insulating portion is an integrally sintered body of the surface of the two solid electrolyte layers and the sintered bodies means that the insulating portion and the two solid electrolyte layers are joined by sintering. Specifically, both the insulating portion and the two solid electrolyte layers are integrally sintered while being sintered bodies. Note that the insulating portion and the two solid electrolyte layers do not have to be strictly entirely integrated, and a part thereof may not be integrated. The insulating portion and the two solid electrolyte layers may be integrated as a whole.

The battery element typically includes a solid electrolyte (hereinafter, may be referred to as a first solid electrolyte). The first solid electrolyte included in the battery element may have any crystal structure, for example, a garnet type crystal structure, a LISICON type crystal structure, a perovskite type crystal structure, or a mixed phase structure thereof. From the viewpoint of further improving low-temperature densification characteristics, moisture resistance, and reaction resistance, the first solid electrolyte included in the battery element preferably has a garnet type crystal structure, a LISICON type crystal structure, or a mixed phase structure thereof, and more preferably has a garnet type crystal structure. The reactivity with the oxide ceramic of the exterior portion increases in the order of the solid electrolyte having a perovskite type crystal structure, the solid electrolyte having a LISICON type crystal structure, and the solid electrolyte having a garnet type crystal structure, and if the battery element contains such solid electrolytes, the oxide ceramic of the exterior portion can more sufficiently suppress the reaction with the solid electrolyte.

When the battery element includes such a first solid electrolyte, the first solid electrolyte may be included in one or more layers selected from a positive electrode layer, a negative electrode layer, and a solid electrolyte layer. From the viewpoint of further improving low-temperature densification characteristics, moisture resistance, and reaction resistance, it is preferable that such a first solid electrolyte is included at least in the solid electrolyte layer.

The fact that the solid electrolyte has a garnet type crystal structure means, in an encompassing manner, that the solid electrolyte not only simply has a "crystal structure of a garnet type", but also has a "crystal structure resembling a garnet type". Specifically, the solid electrolyte has a crystal structure that can be identified as a crystal structure of a garnet type or resembling a garnet type by those skilled in the field of solid-state batteries in X-ray diffraction. More specifically, the solid electrolyte may show, in X-ray diffraction, one or more main peaks corresponding to a Miller index unique to a crystal structure of a so-called garnet type, diffraction pattern (ICDD Card No. 422259) at a predetermined incident angle, or may show one or more main peaks having different incident angles (that is, peak positions or diffraction angles) and intensity ratios (that is, peak intensities or diffraction intensity ratios) due to a difference in composition from one or more main peaks corresponding to a Miller index unique to a crystal structure of a so-called garnet type as a crystal structure resembling a garnet type. Examples of a typical diffraction pattern of a crystal structure resembling a garnet type include ICDD Card No. 00-045-0109 or the like.

The solid electrolyte having a garnet type crystal structure may have any chemical composition. The garnet type solid electrolyte has, for example, a chemical composition represented by the following general formula (2).

[Chemical Formula 2]

$$(Li_p A^1_y) (La_{\beta-z} B^1_z) (D^1_{\gamma-x} Bi_x) O_{12-\delta} \qquad (2)$$

In the formula (2), $A^1$ represents a metal element occupying a Li site in a garnet type crystal structure. $A^1$ typically represents one or more elements selected from the group consisting of gallium (Ga), aluminum (Al), magnesium (Mg), zinc (Zn), and scandium (Sc). $A^1$ is preferably one or more elements selected from the group consisting of gallium (Ga) and aluminum (Al), and more preferably two elements of Ga and Al from the viewpoint of further improving the low-temperature densification characteristics, moisture resistance, and reaction resistance.

In the general formula (2), $B^1$ represents a metal element occupying a La site in the garnet type crystal structure. $B^1$ typically represents one or more elements selected from the group consisting of calcium (Ca), strontium (Sr), barium (Ba), and lanthanoid elements. Examples of the lanthanoid elements include cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu).

In the formula (2), $D^1$ refers to a metal element occupying the six-coordination site in the garnet type crystal structure. The six-coordination site in the garnet type crystal structure is, for example, a site occupied by Nb in $Li_5La_3Nb_2O_{12}$ (ICDD Card No. 00-045-0109) having a garnet type crystal structure, and a site occupied by Zr in $Li_7La_3Zr_2O_{12}$ (ICDD Card. No 01-078-6708) having a garnet type crystal structure. $D^1$ represents one or more elements selected from the group consisting of transition elements capable of being six-coordinate with oxygen and typical elements belonging to Groups 12 to 15. Examples of the transition elements capable of being six-coordinate with oxygen include scandium (Sc), zirconium (Zr), titanium (Ti), tantalum (Ta), niobium (Nb), hafnium (Hf), molybdenum (Mo), tungsten (W), and tellurium (Te). Examples of the typical elements belonging to Groups 12 to 15 include indium (In), germanium (Ge), tin (Sn), lead (Pb), antimony (Sb), and bismuth (Bi). $D^1$ is typically one or more elements selected from the group consisting of Zr (zirconium), Sn (tin), Sb (antimony), Ti (titanium), Ta (tantalum), Nb (niobium), Hf (hafnium), Mo (molybdenum), W (tungsten), and Te (tellurium), and from the viewpoint of improving the low-temperature densification characteristics, the moisture resistance, and the reaction resistance, preferably includes one or more elements selected from the group consisting of Zr (zirconium), Ta (tantalum), and Nb (niobium), and more preferably includes Zr (zirconium) and Ta (tantalum).

In the formula (2), x satisfies $0 \leq x \leq 1.00$, and from the viewpoint of further improving the low-temperature densification characteristics, the moisture resistance, and the reaction resistance, preferably satisfies $0 \leq x \leq 0.70$, more preferably $0 \leq x \leq 0.40$, further more preferably $0 \leq x \leq 0.40$, and particularly preferably $0 \leq x \leq 0.20$.

y satisfies $0 \leq y \leq 0.50$, and from the viewpoint of further improving the low-temperature densification characteristics, the moisture resistance, and the reaction resistance, y preferably satisfies $0 \leq y \leq 0.40$, more preferably $0 \leq y \leq 0.30$, and further more preferably $0 \leq y \leq 0.20$.

$\beta$ satisfies $2.5 \leq \beta \leq 3.5$, and from the viewpoint of further improving the low-temperature densification characteristics, the moisture resistance, and the reaction resistance, preferably $2.7 \leq \beta \leq 3.3$, more preferably $2.8 \leq \beta \leq 3.2$, and further more preferably $2.9 \leq \beta \leq 3.1$.

z satisfies $0 \leq z \leq 2.00$, and from the viewpoint of further improving the low-temperature densification characteristics, the moisture resistance, and the reaction resistance, preferably satisfies $0 \leq z \leq 1.00$, more preferably $0 \leq z \leq 0.50$, and further more preferably 0.

y satisfies $1.5 \leq \gamma \leq 2.5$, and from the viewpoint of further improving the low-temperature densification characteristics, the moisture resistance, and the reaction resistance, preferably $1.7 \leq \gamma \leq 2.3$, more preferably $1.8 \leq \gamma \leq 2.2$, and further more preferably $1.9 \leq \gamma \leq 2.0$.

In the formula (2), p typically satisfies $6.0 \leq p \leq 7.0$, and from the viewpoint of further improving the low-temperature densification characteristics, the moisture resistance, and the reaction resistance, preferably satisfies $6.2 \leq p \leq 6.8$, more preferably $6.4 \leq p \leq 6.8$.

a is the average valence of $A^1$. The average valence of $A^1$ is, for example, a value represented by $(n1 \times a + n2 \times b + n3 \times c)/(n1 + n2 + n3)$ in a case where the number of elements X having a valence of a+ is n1, the number of elements Y having a valence of b+ is n2, and the number of elements Z having a valence of c+ is n3 in the elements represented by $A^1$.

b is the average valence of $B^1$. The average valence of $B^1$ is, for example, the same value as the above-described average valence of $A^1$ in a case where the number of elements X having a valence of a+ is n1, the number of elements Y having a valence of b+ is n2, and the number of elements Z having a valence of c+ is n3 in the elements represented by $B^1$.

c is the average valence of $D^1$. The average valence of $D^1$ is, for example, the same value as the abo-described average valence of $A^1$ when $D^1$ is recognized as n1 elements X with a valence a+, n2 elements Y with a valence b+, and n3 elements Z with a valence c+.

$\delta$ represents an oxygen deficiency amount, and may be 0. $\delta$ may typically satisfy $0 \leq \delta < 1$. The oxygen deficiency amount $\delta$ cannot be quantitatively analyzed using the latest device, and therefore may be regarded as 0.

The molar ratio of each element in the chemical composition of the oxide ceramic of the present invention does not necessarily coincide with, for example, the molar ratio of each element in the general formula (2), and tends to deviate from this molar ratio according to the analysis method, but an effect of the present invention is exhibited as long as the compositional deviation does not change the properties.

In the present invention, the chemical composition of the oxide ceramic may be the composition of the whole ceramic material determined using an inductively coupled plasma method (ICP). The chemical composition may be measured and calculated using inductively coupled plasma atomic emission spectrometry (ICP-AES) or laser ablation inductively coupled plasma mass spectrometry (LA-ICP-MS). The chemical composition may be measured and calculated using XPS analysis, or may be determined using energy dispersive X-ray spectroscopy (TEM-EDX) and/or wavelength dispersive X-ray spectroscopy (WDX). The chemical composition may be obtained by performing quantitative analysis (composition analysis) at arbitrary 100 points of each of arbitrary 100 sintered grains and calculating the average of the resulting values.

Specific examples of the garnet type solid electrolyte represented by the general formula (2) include $Li_{6.6}La_3Zr_{1.6}Ta_{0.4}O_{12}$, $Li_{6.4}Ga_{0.05}Al_{0.15}La_3Zr_2O_{12}$, $Li_{6.75}La_3Zr_{1.75}Nb_{0.25}O_{12}$, and $Li_{6.53}La_3Zr_{1.53}Ta_{0.4}Bi_{0.07}O_{12}$.

The LISICON type crystal structure of the solid electrolyte encloses a $\beta_I$ structure, a $\beta_{II}$ type structure, a $\beta_{II}'$ type structure, a $T_I$ type structure, a $T_{II}$ type structure, a $\gamma_{II}$ type structure, and a $\gamma_0$ type structure. That is, the LISICON type solid electrolyte may include one or more solid electrolytes having a $\beta_I$ structure, a $\beta_{II}$ type structure, a $\beta_{II}$' type structure, a $T_I$ type structure, a $T_{II}$ type structure, a $\gamma_{II}$ type structure, a $\gamma_0$ type structure, or a composite structure thereof. The LISICON type structure of the solid electrolyte is preferably a $\gamma_{II}$ type structure from the viewpoint of further improving the low-temperature densification characteristics, the moisture resistance, and the reaction resistance.

The fact that the solid electrolyte has a $\gamma_{II}$ type structure means that the solid electrolyte has a $\gamma_{II}$ type crystal structure, and in a broad sense, means having a crystal structure that can be recognized as a $\gamma_{II}$ type crystal structure by those skilled in the field of solid-state batteries. In a narrow sense, the fact that the solid electrolyte has a $\gamma_{II}$ type structure means that the solid electrolyte shows one or more main peaks corresponding to a Miller index unique to a so-called $\gamma_{II}$ $Li_3VO_4$ type crystal structure at a predetermined incident angle in X-ray diffraction. The compound that has a $\gamma_{II}$ type structure (that is, solid electrolyte) is described, for example, in the document "J. solid state chem" (A.R. West et.al, J. solid state chem., 4, 20-28 (1972)), and examples thereof include ICDD Card No. 01-073-2850.

The fact that the solid electrolyte has a $\beta_I$ type structure means that the solid electrolyte has a $\beta_I$ type crystal structure, and in a broad sense, means having a crystal structure that can be recognized as a $\beta_I$ type crystal structure by those skilled in the field of solid-state batteries. In a narrow sense, the fact that the solid electrolyte has a $\beta_I$ type structure means that the solid electrolyte shows one or more main peaks corresponding to a Miller index unique to a so-called $\beta_I$-$Li_3VO_4$ type crystal structure at a predetermined incident angle in X-ray diffraction. The compound that has a $\beta_I$ type structure (that is, solid electrolyte) is described, for example, in the document "J. solid state chem" (A.R. West et.al, J. solid state chem., 4, 20-28 (1972)), and as an example thereof, the following table shows, for example, the XRD data (the d-value of plane spacing and the corresponding Miller indices) listed therein.

[Table 1]

| $d(Å)$ | $I$ | $h\,k\,l$ |
|---|---|---|
| | $Li_3CrSiO_4$ | |
| | $\beta_I$, 25°C | |
| 5.4 | 80 | 1 1 0 |
| 4.08 | 60 | 1 2 0 |
| 3.88 | 60 | 1 0 1 |
| 3.65 | 100 | 1 1 1, 0 2 1 |
| 3.14 | 20 | 2 0 0, 1 2 1 |
| 3.10 | 40 | 1 3 0 |
| 2.71 | 80 | 2 2 0 |
| 2.68 | 60 | 0 4 0 |
| 2.47 | 80 | 0 0 2 |
| 2.38 | 60 | 2 2 1 |
| 2.36 | 20 | 0 4 1 |

The fact that the solid electrolyte has a $\beta_{II}$ type structure means that the solid electrolyte has a $\beta_{II}$ type crystal structure, and in a broad sense, means having a crystal structure that can be recognized as a $\beta_{II}$ type crystal structure by those skilled in the field of solid-state batteries. In a narrow sense, the fact that the solid electrolyte has a $\beta_{II}$ type structure means that the solid electrolyte shows one or more main peaks corresponding to a Miller index unique to a so-called $\beta_{II}$-$Li_3VO_4$ type crystal structure at a predetermined incident angle in X-ray diffraction. The compound that has a $\beta_{II}$ type structure (that is, solid electrolyte) is described, for example, in the document "J. solid state chem" (A.R. West et.al, J. solid state chem., 4, 20-28 (1972)), and examples thereof include ICDD Card No. 00-024-0675.

The fact that the solid electrolyte has a $\beta_{II}$' type structure means that the solid electrolyte has a $\beta_{II}$' type crystal structure, and in a broad sense, means having a crystal structure that can be recognized as a $\beta_{II}$' type crystal structure by those skilled in the field of solid-state batteries. In a narrow sense, the fact that the solid electrolyte has a $\beta_{II}$' type structure means that the solid electrolyte shows one or more main peaks corresponding to a Miller index unique to a so-called $\beta_{II}$'-$Li_3VO_4$ type crystal structure at a predetermined incident angle in X-ray diffraction. The compound that has a $\beta_{II}$' type structure (that is, solid electrolyte) is described, for example, in the document "J. solid state chem" (A.R. West et.al, J. solid state chem., 4, 20-28 (1972)), and as an example thereof, the following table shows, for example, the XRD data (the d-value of plane spacing and the corresponding Miller indices) listed therein.

[Table 2]

| $Li_2CoGeO_4$ $\beta_{II}$, 25°C | | |
|---|---|---|
| d(A) | I | h k l |
| | | 0 1 0 |
| 4.17 | 80 | 1 1 0 |
| 3.96 | 80 | 1 0 1 |
| 3.70 | 10 | 0 1 1 |
| 3.20 | 20 | 2 0 0, 1 1 1 |
| 2.75 | 100 | 2 1 0 |
| 2.74 | 60 | 0 2 0 |
| 2.50 | 80 | 0 0 2 |
| | | 1 2 0 |

The fact that the solid electrolyte has a $T_I$ type structure means that the solid electrolyte has a $T_I$ type crystal structure, and in a broad sense, means having a crystal structure that can be recognized as a $T_I$ type crystal structure by those skilled in the field of solid-state batteries. In a narrow sense, the fact that the solid electrolyte has a $T_I$ type structure means that the solid electrolyte shows one or more main peaks corresponding to a Miller index unique to a so-called $T_I$-$Li_3VO_4$ type crystal structure at a predetermined incident angle in X-ray diffraction. The compound that has a $T_I$ type structure (that is, solid electrolyte) is described, for example, in the document "J. solid state chem" (A.R. West et.al, J. solid state chem., 4, 20-28 (1972)), and examples thereof include ICDD Card No. 00-024-0668.

The fact that the solid electrolyte has a $T_{II}$ type structure means that the solid electrolyte has a $T_{II}$ type crystal structure, and in a broad sense, means having a crystal structure that can be recognized as a $T_{II}$ type crystal structure by those skilled in the field of solid-state batteries. In a narrow sense, the fact that the solid electrolyte has a $T_{II}$ type structure means that the solid electrolyte shows one or more main peaks corresponding to a Miller index unique to a so-called $T_{II}$-$Li_3VO_4$ type crystal structure at a predetermined incident angle in X-ray diffraction. The compound that has a $T_{II}$ type structure (that is, solid electrolyte) is described, for example, in the document "J. solid state chem" (A.R. West et.al, J. solid state chem., 4, 20-28 (1972)), and examples thereof include ICDD Card No. 00-024-0669.

The fact that the solid electrolyte has a $\gamma_0$ type structure means that the solid electrolyte has a $\gamma_0$ type crystal structure, and in a broad sense, means having a crystal structure that can be recognized as a $\gamma_0$ type crystal structure by those skilled in the field of solid-state batteries. In a narrow sense, the fact that the solid electrolyte has a $\gamma_0$ type structure means that the solid electrolyte shows one or more main peaks corresponding to a Miller index unique to a so-called $\gamma_0$-$Li_3VO_4$ type crystal structure at a predetermined incident angle in X-ray diffraction. The compound that has a $\gamma_0$ type structure (that is, solid electrolyte) is described, for example, in the document "J. solid state chem" (A.R. West et.al, J. solid state chem., 4, 20-28 (1972)), and as an example thereof, the following table shows, for example, the XRD data (the d-value of plane spacing and the corresponding Miller indices) listed therein.

[Table 3]

| d(Å) | I | h k l |
|---|---|---|
| | $Li_4CoSiO_4$ | |
| | $\gamma_0$, 25°C | |
| 5.4 | 60 | 1 1 0, 0 2 0 |
| 4.08 | 80 | 1 2 0 |
| 3.92 | 60 | 1 0 1 |
| 3.69 | 20 | 1 1 1, 0 2 1 |
| 3.67 | 100 | |
| 3.16 | 20 | 1 2 1 |
| 3.10 | 60 | 2 0 0, 1 3 0, 2 1 0 |
| 2.90 | 20 | 0 3 1 |
| 2.71 | 100 | 2 2 0 |
| 2.68 | 60 | 0 4 0 |
| 2.65 | 20 | 1 3 1 |
| 2.64 | 20 | |
| 2.59 | 20 | 2 1 1 |
| 2.57 | 20 | |
| 2.51₄ | 100 | 0 0 2 |

The solid electrolyte having a LISICON type crystal structure may have any chemical composition. The LISICON type solid electrolyte has, for example, a chemical composition represented by the following general formula (3).
[Chemical Formula 3]

$$(Li_{[3-ax+(5-b)(1-y)]}A_x) (V_y B_{1-y})O_4 \qquad (3)$$

In the formula (3), A is one or more elements selected from the group consisting of Na (sodium), K (potassium), Mg (magnesium), Ca (calcium), Al (aluminum), Ga (gallium), Zn (zinc), Fe (iron), Cr (chromium), and Co (cobalt).

B is one or more elements selected from the group consisting of Zn (zinc), Al (aluminum), Ga (gallium), Si (silicon), Ge (germanium), Sn (tin), P (phosphorus), As (arsenic), Ti (titanium), Mo (molybdenum), W (tungsten), Fe (iron), Cr (chromium), and Co (cobalt), and from the viewpoint of further improving the low-temperature densification characteristics, the moisture resistance, and the reaction resistance, preferably one or more elements selected from the group consisting of Si (silicon) and P (phosphorus), and more preferably Si (silicon) or P (phosphorus).

x has a relationship of $0 \leq x \leq 1.0$, particularly $0 \leq x \leq 0.2$, and from the viewpoint of further improving the low-temperature densification characteristics, the moisture resistance, and the reaction resistance, preferably a relationship of $0 \leq x \leq 0.1$, and more preferably 0.

y has a relationship of $0 \leq y \leq 1.0$, and from the viewpoint of further improving the low-temperature densification characteristics, the moisture resistance, and the reaction resistance, preferably a relationship of $0 \leq y \leq 0.85$.

a is an average valence of A. The average valence of A is, for example, a value represented by $(n1 \times a + n2 \times b + n3 \times c)/(n1 + n2 + n3)$ when the number of elements X having a valence of a+ is n1, the number of elements Y having a valence of b+ is n2, and the number of elements Z having a valence of c+ is n3 in the elements represented by A.

b is an average valence of B. The average valence of B is, for example, the same value as the average valence of A described above when B is recognized as n1 of elements X having a valence a+, n2 of elements Y having a valence b+, and n3 of elements Z having a valence c+.

Specific examples of the LISICON type solid electrolyte represented by the general formula (3) include $Li_{3.2}V_{0.8}Si_{0.2}O_4$ and $Li_{3.5}P_{0.5}Si_{0.5}O_4$.

The fact that the solid electrolyte has a perovskite type crystal structure means, in an encompassing manner, that the solid electrolyte not only simply has a "crystal structure of a perovskite type", but also has a "crystal structure resembling a perovskite type". Specifically, the solid electrolyte has a crystal structure that can be identified as a crystal structure of a perovskite type or resembling a perovskite type by those skilled in the field of solid-state batteries in X-ray diffraction. More specifically, the solid electrolyte may show, in X-ray diffraction, one or more main peaks corresponding to a Miller index unique to a crystal structure of a so-called perovskite type (diffraction pattern: ICDD Card No. 00-046-0465) at a predetermined incident angle, or may show one or more main peaks having different incident angles (that is, peak positions or diffraction angles) and intensity ratios (that is, peak intensities or diffraction intensity ratios) due to a difference in composition from one or more main peaks corresponding to a Miller index unique to a crystal structure of a so-called perovskite type as a crystal structure resembling a perovskite type. Examples of a typical diffraction pattern of a crystal structure resembling a perovskite type include ICDD Card No. 00-046-0466.

The solid electrolyte having a perovskite type crystal structure may have any chemical composition. The perovskite type solid electrolyte has, for example, a chemical composition represented by the following general formula (3).

[Chemical Formula 4]

$$Li_{3x}La_{2/3-x}TiO_3 \qquad (4)$$

It is preferable to have an average chemical composition represented by the above formula.

In the formula (4), x preferably satisfies $0.09 < x < 0.167$. Further, it is more preferable that $0.10 < x < 0.12$.

Specific examples of the perovskite type solid electrolyte represented by the general formula (4) include $Li_{0.35}La_{0.55}TiO_3$ and $Li_{0.5}La_{0.5}TiO_3$.

The chemical composition of the solid electrolyte means the average value of the chemical composition of the solid electrolyte in the thickness direction of the layer containing the solid electrolyte (for example, the solid electrolyte layer). The average chemical composition of the solid electrolyte can be analyzed and measured by breaking the solid-state battery and performing composition analysis by energy-dispersive X-ray spectroscopy (EDX) using SEM-EDX in a field of view in which the entire layer fits in the thickness direction.

The solid electrolyte may be obtained by the same method as in the case of the oxide ceramic except that a raw material compound containing a predetermined metal atom is used, or may be obtained as a commercially available product.

From the viewpoint of suppressing deterioration of the battery in a longer period of time, all the layers constituting the battery element 1 may be integrally sintered as sintered bodies together between two adjacent layers. The statement that all the layers are integrally sintered as sintered bodies together between two adjacent layers means that the two adjacent layers are joined by sintering. Specifically, both the two adjacent layers are sintered bodies and further integrally sintered. Not the whole of the two adjacent layers needs to be strictly integrated, and a portion thereof does not have to be integrated. Two adjacent layers may be integrated as a whole. For example, the positive electrode layer 1a, the solid electrolyte layer 1b, and the negative electrode layer 1a may be integrally sintered in a predetermined stacking order.

· Positive electrode layer and negative electrode layer

The positive electrode layer is a so-called positive electrode active material layer and may additionally include the positive electrode current collecting layer. When the positive electrode layer has the positive electrode current collecting layer, the positive electrode layer may be provided on one side or on both sides of the positive electrode current collecting layer. The positive electrode layer is formed of a sintered body containing positive electrode active material grains and may be typically formed of a sintered body including positive electrode active material grains, electron conductive material grains, and solid electrolyte grains contained in the solid electrolyte layer. The positive electrode layer (particularly the positive electrode active material layer) may include the first solid electrolyte described above.

The negative electrode layer is a so-called negative electrode active material layer and may additionally include the negative electrode current collecting layer. When the negative electrode layer has the negative electrode current collecting layer, the negative electrode layer may be provided on one side or on both sides of the negative electrode current collecting layer. The negative electrode layer is formed of a sintered body including negative electrode active material grains and may be formed of a sintered body including negative electrode active material grains, electron conductive material grains, and solid electrolyte grains contained in the solid electrolyte layer. The negative electrode layer (particularly the negative electrode active material layer) may include the first solid electrolyte described above.

The positive electrode active material contained in the positive electrode layer and the negative electrode active material contained in the negative electrode layer are substances involved in the transfer of electrons in the solid-state battery, and ions contained in the solid electrolyte material constituting the solid electrolyte layer move (conduct) between the positive electrode and the negative electrode to transfer electrons, whereby charging and discharging are performed. The positive electrode layer and the negative electrode layer may be layers particularly capable of occluding and releasing lithium ions. That is, the solid-state battery according to the present invention may be a solid-state secondary battery in which lithium ions move between the positive electrode and the negative electrode with the solid electrolyte layer interposed therebetween to charge and discharge the battery.

The positive electrode active material included in the positive electrode layer is not particularly limited, and examples thereof include at least one selected from the group consisting of a lithium-containing phosphoric acid compound having a NASICON type structure, a lithium-containing phosphoric acid compound having an olivine type structure, a lithium-containing layered oxide, a lithium-containing oxide having a spinel type structure, and the like. One example of the lithium-containing phosphoric acid compound having a NASICON type structure includes $Li_3V_2(PO_4)_3$. Examples of the lithium-containing phosphoric acid compound having an olivine type structure include $Li_3Fe_2(PO_4)_3$ and $LiMnPO_4$. Examples of the lithium-containing layered oxide include $LiCoO_2$ and $LiCo_{1/3}Ni_{1/3}Mn_{1/3}O_2$. Examples of the lithium-containing oxides that have a spinel-type structure include $LiMn_2O_4$ and $LiNi_{0.5}Mn_{1.5}O_4$.

The negative electrode active material included in the negative electrode layer is not particularly limited, and examples thereof include at least one selected from the group consisting of an oxide containing at least one element selected from the group consisting of Ti, Si, Sn, Cr, Fe, Nb, and Mo, a graphite-lithium compound, a lithium alloy, a lithium-containing phosphoric acid compound having a NASICON type structure, a lithium-containing phosphoric acid compound having an olivine type structure, a lithium-containing oxide having a spinel type structure, and an oxide having a $\beta$-$Li_3VO_4$ type structure or a $\gamma$-$Li_3VO_4$ type structure. Examples of the lithium alloys include Li-Al. One example of the lithium-containing phosphoric acid compound having a NASICON type structure includes $Li_3V_2(PO_4)_3$. One example of the lithium-containing phosphoric acid compound having an olivine type structure includes $Li_3Fe_2(PO_4)_3$. Examples of the lithium-containing oxides that have a spinel type structure include $Li_4Ti_5O_{12}$. Examples of the negative electrode active material having a $\beta$-$Li_3VO_4$ type structure include $Li_3VO_4$. Examples of the oxide having a $\gamma$-$Li_3VO_4$ type structure include $Li_{3.2}V_{0.8}Si_{0.2}O_4$.

The electron conductive material included in the positive electrode layer and the negative electrode layer is not particularly limited, and examples thereof include a metal material such as silver, palladium, gold, platinum, aluminum, copper, or nickel, and a carbon material. In particular, carbon is preferable because carbon hardly reacts with the positive electrode active material, the negative electrode active material, and the solid electrolyte material, and has an effect of reducing the internal resistance of the solid-state battery.

The solid electrolyte material included in the positive electrode layer and the negative electrode layer may be selected from, for example, the same materials as the solid electrolyte material that can be included in the solid electrolyte layer described later.

The positive electrode layer and the negative electrode layer may each independently include a firing aid. The firing aid is not particularly limited, and may be, for example, at least one selected from the group consisting of lithium oxide, sodium oxide, potassium oxide, boron oxide, silicon oxide, bismuth oxide, and phosphorus oxide.

Thicknesses of the positive electrode layer and the negative electrode layer are not particularly limited, and may each independently be, for example, 2 $\mu$m or more and 50 $\mu$m or less, may particularly be 5 $\mu$m or more and 30 $\mu$m or less.

· Solid electrolyte layer

The solid electrolyte layer 1b may include a firing aid. The firing aid included in the solid electrolyte layer may be selected from, for example, the same materials as the firing aid that can be included in the positive electrode layer and the negative electrode layer.

In the solid electrolyte layer 1b, an end region (for example, in the solid electrolyte layer, a portion in which the positive electrode layer and the negative electrode layer do not face each other in the thickness direction) of the solid electrolyte layer in a sectional view may include the specific oxide ceramic described above. The "portion where the positive electrode layer and the negative electrode layer do not face each other in the thickness direction in the solid electrolyte layer" may be a portion in which the positive electrode layer or the negative electrode layer and the insulating portion face each other in the solid electrolyte layer, and may be, for example, a portion indicated by "1b'" in FIG. 1.

A thickness of the solid electrolyte layer is not particularly limited, and may be, for example, 1 $\mu$m or more and 15 $\mu$m or less, and may particularly be 1 $\mu$m or more and 5 $\mu$m or less.

(External electrode)

The external electrode 3 is a member for drawing electric power (in particular, current) generated in the battery element 1 (particularly, electrode layer) to the outside. The external electrode 3 encompasses a positive electrode side external electrode for drawing electric power (particularly current) from the positive electrode layer to the outside and a negative electrode side external electrode for drawing electric power (particularly current) from the negative electrode layer to the outside. The external electrode 3 may have a form of a sintered body from the viewpoints of reducing the production cost of the solid-state battery by integral firing and reducing the internal resistance of the solid-state battery.

When having the form of a sintered body, the external electrode 3 may be composed of, for example, a sintered body including electron conductive material grains and a firing aid. The electron conductive material included in the external electrode 3 may be selected from, for example, the same materials as the electron conductive material that can be included in the positive electrode layer and the negative electrode layer. The firing aid included in the external electrode 3 may be selected from, for example, the same materials as the firing aid that can be included in the positive electrode layer and the negative electrode layer.

<Second embodiment>

In the solid battery according to the second embodiment of the present invention, only the insulating portion includes the specific oxide ceramic described above. As described above, only the insulating portion includes the specific oxide ceramic described above, thereby also allowing the effect of improving the low-temperature densification characteristics, the moisture resistance, and the reaction resistance to be obtained.

The solid-state battery of the present embodiment is the same as the solid-state battery of the first embodiment except that the insulating portion includes the specific oxide ceramic described above and the exterior portion does not include the specific oxide ceramic described above.

In the present embodiment, the insulating portion is the same as the insulating portion "when the insulating portion includes the specific oxide ceramic described above in the first embodiment".

In the present embodiment, the exterior portion may be composed of any oxide ceramic known in the field of solid-state batteries, and for example, may be composed of an oxide ceramic similar to the "other oxide ceramic" described in the description of the exterior portion in the first embodiment.

[Method for producing solid-state battery]

A method for producing the solid-state battery of the present invention includes:

a step of forming an unfired stacked body; and
a step of firing the unfired stacked body.

(Step of forming unfired stacked body)

The unfired stacked body can be produced by a printing method such as a screen printing method, a green sheet method using a green sheet, an immersion method, or a composite method thereof, but is obviously not limited to these methods.

For example, the solid electrolyte layer and the main surface exterior portion are produced by a green sheet method. An electrode layer (positive electrode layer and/or negative electrode layer) and an insulating portion are formed on the obtained solid electrolyte layer sheet by a printing method. After the solid electrolyte layer sheet on which the electrode layer and the like are printed and the main surface exterior portion sheet are stacked in a predetermined order, the side surface exterior portion is formed by an immersion method. Thereafter, the external electrode is formed by an immersion method. As a result, the unfired stacked body is formed.

(Firing step)

The unfired stacked body is subjected to firing. The firing is performed by removing the organic material at, for example, 500°C in a nitrogen gas atmosphere including oxygen gas, and then heating at 1000°C or less (for example, 550°C or more and 1000°C or less), preferably 700°C or more and 900°C or less (particularly, 750°C or more and 850°C or less). The firing time may be typically 1 hour or more and 10 hours or less (particularly 3 hours or more and 7 hours or less).

The present invention as described above encompasses the following preferable aspects.

<1> A solid-state battery, including:

an exterior portion; and an insulating portion, wherein
at least one of the exterior portion and the insulating portion includes an oxide ceramic including:

Li (lithium);
Mg (magnesium);
one or more elements (M) selected from the group consisting of Group 4 and Group 5 elements; and
Bi (bismuth).

<2> The solid-state battery according to <1>, in which the oxide ceramic has the following molar ratio:

$$0 < Bi/(Mg + M) \leq 0.100.$$

<3> The solid-state battery according to <1> or <2>, in which the oxide ceramic has the following molar ratio:

$$0 < Mg/M \leq 9.8.$$

<4> The solid-state battery according to <1> to <3>, in which the oxide ceramic has the following molar ratio:

$$0 < Li/M \leq 5.$$

<5> The solid-state battery according to any one of <1> to <4>, in which the oxide ceramic has a rock salt type crystal structure, a spinel type crystal structure, a layered rock salt type crystal structure, or a mixed phase structure thereof.
<6> The solid-state battery according to any one of <1> to <5>, in which the element (M) is at least one selected from Ti, Zr, Hf, Ta, and Nb.
<7> The solid-state battery according to any one of <1> to <6>, in which a main phase in the oxide ceramic has only a rock salt type crystal structure or a layered rock salt type crystal structure.
<8> The solid-state battery according to any one of <1> to <7>, in which

a main phase in the oxide ceramic has only a rock salt type crystal structure or a layered rock salt type crystal structure,
the element (M) is at least one selected from Ti, Ta, and Nb, or two selected from Zr and Ta, and
the oxide ceramic has the following molar ratio:

$$0.004 \leq Bi/ (Mg + M) \leq 0.060.$$

<9> The solid-state battery according to any one of <1> to <8>, in which

the oxide ceramic has a grain boundary, and
the grain boundary includes at least one element selected from the group consisting of Mg and M in addition to Bi.

<10> The solid-state battery according to any one of <1> to <9>, in which

the oxide ceramic has a grain boundary, and
the grain boundary includes the Li in addition to the Bi.

<11> The solid-state battery according to any one of <1> to <10>, in which

the oxide ceramic has a grain boundary and a grain boundary vicinity portion close to the grain boundary, and
the Bi is concentrated at the grain boundary and/or in the vicinity of the grain boundary.

<12> The solid-state battery according to any one of <1> to <11>, in which the Bi is present at least at a grain boundary of the oxide ceramic.
<13> The solid-state battery according to any one of <1> to <12>, in which

the solid-state battery further includes a battery element including one or more battery constituent units including a positive electrode layer and a negative electrode layer facing each other and a solid electrolyte layer disposed between the positive electrode layer and the negative electrode layer, and a positive electrode side external electrode and a negative electrode side external electrode for drawing electric power generated in the battery element to the outside,
the exterior portion is a member that covers the outside of the battery element, and
the insulating portion includes an insulating portion disposed between the positive electrode layer and the negative electrode side external electrode, and an insulating portion disposed between the negative electrode layer and the positive electrode side external electrode.

<14> The solid-state battery according to <13>, in which one or more layers selected from the positive electrode layer, the negative electrode layer, and the solid electrolyte layer include at least one solid electrolyte selected from a garnet type solid electrolyte, a LISICON type solid electrolyte, and a perovskite type solid electrolyte.
<15> The solid-state battery according to <14>, in which the one or more layers include a garnet type solid electrolyte or a LISICON type solid electrolyte.
<16> The solid-state battery according to <14>, in which the one or more layers include a garnet type solid electrolyte.

<17> The solid-state battery described in any one of <13> to <16>, in which the exterior portion and the insulating portion have a layer form.

<18> The solid-state battery according to any one of <13> to <17>, in which

the exterior portion is in direct contact with a surface of the battery element, and

the insulating portion is disposed between two solid electrolyte layers and is in direct contact with each surface of the two solid electrolyte layers.

<19> The solid-state battery according to any one of <13> to <18>, in which

the exterior portion is an integrally sintered body formed of a surface of the battery element and sintered bodies, and

the insulating portion is an integrally sintered body formed of a surface of each of the two solid electrolyte layers and sintered bodies.

Hereinafter, the present invention will be described in more detail on the basis of specific examples, but the present invention is not limited to the following examples and can be appropriately changed and implemented without changing the gist of the present invention.

EXAMPLES

[Experimental Example 1]

<Examples and Comparative Example>

[Synthesis of exterior substrate (main phase)]

Raw materials including lithium carbonate ($Li_2CO_3$), magnesium oxide (MgO), titanium oxide ($TiO_2$), niobium oxide ($Nb_2O_5$), zirconium oxide ($ZrO_2$), tantalum oxide ($Ta_2O_5$), hafnium oxide ($HfO_2$), aluminum oxide ($Al_2O_3$), gallium oxide ($Ga_2O_3$), and zinc oxide (ZnO) were weighed such that the composition of the main phase was as shown in the following table. Then, water was added, the resulting mixture was enclosed in a polyethylene polypot, and the polypot was rotated on a pot rack at 150 rpm for 16 hours to mix the raw materials. Incidentally, lithium carbonate as a Li source was charged in an excess amount of 5% by mass with respect to the target composition in consideration of Li deficiency during sintering.

Then, the resulting slurry was dried, and then calcined at 1050°C for 5 hours. A mixed solvent of toluene and acetone was added to the obtained calcined product, and the mixture was pulverized for 12 hours with a planetary ball mill and then dried to obtain a powder of an exterior substrate (oxide ceramic) having the composition shown in each of examples or comparative examples.

As $Al_2O_3$, a commercially available product was used. Sample powder was obtained by pulverizing and drying α-$Al_2O_3$ manufactured by KOJUNDO CHEMICAL LABORATORY CO., LTD. and having a grain diameter of about 1 μm under the same conditions as described above.

[Synthesis of firing aid]

Raw materials including lithium hydroxide monohydrate ($LiOH \cdot H_2O$) and bismuth oxide $Bi_2O_3$ were weighed such that the composite oxide had the composition shown in the following table.

Then, the weighed raw materials were mixed using an agate mortar. The resulting mixed powder was calcined at 600°C for 5 hours in a $N_2$ atmosphere to obtain a calcined powder.

[Preparation of sintered body]

The exterior substrate powder and the firing aid powder were weighed so as to have the exterior ceramic chemical composition shown in the table, and mixed using a mortar to obtain a mixed powder.

The obtained mixed powder was kneaded with a butyral resin, an alcohol, and a binder to produce a slurry. The slurry was sheet-molded on a PET film using a doctor blade method to obtain a sheet. The prepared sheet was stacked until the thickness of the sheet reached 200 μm, then the sheet was cut into a disk having a diameter of 10 cm, and fired at a temperature of 400°C to remove the butyral resin, and then the sheet was fired at the temperature shown in the table for 10 hours. Thereafter, cooling was performed to obtain an exterior ceramic single plate.

Only Example 1 was cut into a square of 15 mm square for a sample used in the MA method (water vapor barrier properties 2) described later, and firing was performed under the same conditions as described above to prepare a sample.

[Measurement of area porosity (low-temperature densification characteristics)]

A section of the obtained sintered body of the exterior ceramic was processed with a cross section polisher (CP), and a porcelain structure image was obtained by SEM observation. Thereafter, the area porosity of the exterior ceramic single plate was calculated using image processing software "A-Zou Kun".

◎: Area porosity < 7% (excellent);
o: 7% ≤ area porosity < 10% (favorable);
△: 10% ≤ area porosity < 20% (passed: no practical problem); and
✕: 20% ≤ area porosity (failed: practical problem).

[Evaluation of water vapor barrier properties 1 (moisture resistance)]

Measurement was performed according to a cup method of Japanese Industrial Standard JIS Z 0208-1976. The water vapor transmission rate (WVTR) 1 was measured by measurement at a temperature of 40°C and a relative humidity of 90% for 48 hours. The calculation formula of WVTR1 was as follows.

WVTR1[g/m$^2$/day] = weight of increase in $CaCl_2$ [g]/sample area [m$^2$]/storage time in thermo-hygrostat [day]

Determination criteria

◎: WVTR1 < $1 \times 10^{-1}$ g/m$^2$/day (less than measurement lower limit value) (excellent);
o: $1 \times 10^{-1}$ g/m$^2$/day ≤ WVTR1 < $2 \times 10^{-1}$ g/m$^2$/day (favorable);
△: $2 \times 10^{-1}$ g/m$^2$/day ≤ WVTR1 < 1 g/m$^2$/day (passed: no practical problem); and
✕: 1 g/m$^2$/day ≤ WVTR1 (failed: practical problem).

[Evaluation of water vapor barrier properties 2 (moisture resistance)]

Only in Example 1, the water vapor barrier properties 2 were evaluated by the following method.
The water vapor barrier properties were evaluated by a MA (Modified differential pressure method with an Attached support) method using a gas/water vapor permeability measuring apparatus (CELASIS MAT-002). A sample was placed on the apparatus such that the effective permeation diameter was 10 mm, water vapor at 60°C and 85% was supplied from one upper surface of the sample, and the amount of moisture that had permeated the sample was measured by a detector on the opposite side of the sample. The measurement was performed until the permeability became constant, and WVTR2 was measured when the permeability reached a constant value.
The WVTR2 of Example 1 was $3 \times 10^{-4}$ g/m$^2$/day.

[Overall evaluation of low-temperature densification characteristics and water vapor barrier properties 1 (moisture resistance)]

Among the evaluation results of the low-temperature densification characteristics and the evaluation results of the water vapor barrier properties 1 (moisture resistance), the lower evaluation result was used as the comprehensive evaluation result.

[Evaluation of electron conductivity]

Au electrodes were sputtered on both surfaces of the obtained single plate. Finally, the cell was enclosed in a coin cell of the size 2035 to obtain an evaluation cell. All of the operations described above were performed in a dry room having a dew point of -40°C or less.
At 25°C, 0.5 V was applied to both electrodes, and a transient current was observed. The current flowing 30 minutes after applying the voltage was read as a leakage current. From the leakage current, the electron conductivity was calculated using the following formula.

```
Electron conductivity = (I/V) × (L/A)
```

(I: leakage current, V: applied voltage, L: single plate thickness, A: electrode area)

As a result, it has been confirmed that all the samples used in Comparative Examples and Examples exhibited electron conductivity of $1 \times 10^{-8}$ S/cm or less and were excellent in insulating properties.

[Evaluation of reaction resistance to solid electrolyte]

The exterior substrate (oxide ceramic) obtained in "Synthesis of exterior substrate (main phase)" was mixed with a garnet type solid electrolyte, formed into a tablet shape, and then fired at 800°C for 5 hours. After firing, the crystal phase was analyzed by XRD measurement. The chemical composition of the garnet type solid electrolyte used in each of Comparative Examples and Examples was $Li_{6.6}La_3Zr_{1.6}Ta_{0.4}O_{12}$.

Determination was made according to the following criteria. Specifically, after firing, the tablet fabricated in each Comparative Example or each Example was ground into a powder using a mortar. The resulting powder was packed in a holder, and XRD measurement was performed using a CuKα ray under the conditions of a scan speed of 4.0°/min and an angle measurement range of 10° to 60° to evaluate the crystal phase included in the tablet.

◎: "no decomposition" of solid electrolyte and oxide ceramic (excellent);

△: "partial decomposition" of solid electrolyte or oxide ceramic (passed: residual crystal phase) (no problem in practical use); and

×: "complete decomposition" of the solid electrolyte or the oxide ceramic (failed: practical problem).

"No decomposition" means that in the XRD measurement after firing, all peaks derived from the oxide ceramic and the solid electrolyte before firing are clearly observed, and no side reaction proceeds between them.

The "partial decomposition" means that, in XRD measurement after firing, all peaks derived from the oxide ceramic and the solid electrolyte before firing are observed, but a heterogeneous phase of the third phase is generated in part.

The "complete decomposition" means that, in XRD measurement after firing, a peak of at least one compound of peaks derived from an oxide ceramic and a solid electrolyte before firing is not observed.

A method for synthesizing the solid electrolyte used in the evaluation of reaction resistance is described below.

[Synthesis of garnet type solid electrolyte]

Raw materials including lithium hydroxide monohydrate (LiOH · H₂O), lanthanum hydroxide (La(OH)₃), zirconium oxide (ZrO₂), and tantalum oxide (Ta₂O₅) were weighed so that the solid electrolyte had a predetermined composition. Then, water was added, the resulting mixture was enclosed in a polyethylene polypot, and the polypot was rotated on a pot rack at 150 rpm for 16 hours to mix the raw materials. 3% by mass of excess lithium hydroxide monohydrate (LiOH · H₂O) as a Li source was put based on the target composition in consideration of Li deficiency during sintering.

Then, the obtained slurry was dried and then pre-fired at 1000°C for 5 hours to provide a solid electrolyte powder having a predetermined composition.

[Presence of Bi]

From TEM-EDX observation and SEM observation of the section described later, the presence or absence of Bi at the grain boundary and in the main phase was confirmed, and Bi was confirmed to have any of the following existence forms.

· "Grain boundary": Bi was present only at the grain boundary (second phase) of the oxide ceramic.

· "Main phase": Bi was present only in the main phase (first phase) of the oxide ceramic.

· "Both phases": Bi was present both at the grain boundary (second phase) and in the main phase (first phase) of the oxide ceramic.

· "Absence": Bi was not present either at the grain boundary (second phase) or in the main phase (first phase) of the oxide ceramic.

(TEM-EDX)

TEM apparatus: JEOL JEM-F200

EDX detector: EX-24390UBN5T
EDX system: Noran system 7
Measurement conditions: Bi is detected when EDX is performed at an acceleration voltage of 200 kV using a sample peeled at a thickness of 100 nm or less and measurement is performed under conditions where the count of Mg K$\alpha$ is 550,000 or more in each visual field of 666 nm.

Specifically, the presence or absence of Bi at the grain boundary (second phase) and in the main phase (first phase) of the oxide ceramic was determined based on the presence distribution of the Bi element in the EDX mapping image (300,000 times) as shown in FIG. 7 by TEM-EDX observation.

As a result, for example, when the presence of Bi at the grain boundary can be confirmed, the presence of Bi was recognized. In contrast, when the presence of Bi was not confirmed at the grain boundary in the presence distribution of the Bi element, the absence of Bi was recognized.

In addition, for example, when the presence of Bi in the main phase can be confirmed in the presence distribution of the Bi element, the presence of Bi was recognized. In contrast, when the presence of Bi was not confirmed in the main phase in the presence distribution of the Bi element, the absence of Bi was recognized.

In addition, for example, when the presence of Bi can be confirmed in both phases of the grain boundary and the main phase in the presence distribution of the Bi element, the presence of Bi in "both phases" was recognized.

In addition, for example, when the presence of Bi can not be confirmed in both phases of the grain boundary and the main phase in the presence distribution of the Bi element, the "absence" of Bi was recognized.

[Chemical composition of exterior ceramic single plate]

The exterior ceramic single plate was subjected to ICP-AES analysis to obtain the average chemical composition of the exterior ceramic single plate.

[Content of Mg]

The content of Mg was determined as an average value by ICP-AES analysis of the exterior ceramic single plate.

[Crystal structure of exterior ceramic single plate]

In the exterior ceramic single plate, the crystal structure of the main phase (particularly the inner portion 24) was analyzed with the following analysis apparatus and analysis conditions, and it has been confirmed that an X-ray diffraction image attributable to each crystal structure was obtained.

· X-ray diffraction apparatus
Analysis apparatus: D2 PHASER manufactured by Bruker Corporation
Analysis conditions: Cu K$\alpha$ radiation; 2$\theta$ = 10 to 60°; step size 0.02°/sec.

[Table 4]

| | Exterior composition for use (Charge) | Aid | Firing temperature | Exterior ceramic chemical composition $Li_{\alpha1}A_{\alpha2}Mg_3M_\gamma Bi_x O_\delta$ | | | | | | | Mg (mass%) | Crystal structure | Evaluation | | | | Presence of Bi ** |
|---|---|---|---|---|---|---|---|---|---|---|---|---|---|---|---|---|---|
| | | | | Bi/(Mg + M) ratio | $Li\alpha1$ (Li/M) | $Mg\beta$ (Mg/M) | $M\gamma$ | $A\alpha2$ | Bix | $\delta*$ | | | Area porosity (%) | WVTR1 (g/m2/day) | Comprehensive evaluation | Reaction resistance (1) | |
| Comparative Example 1 | Li0.29Mg0.57Ti0.14O | No | 800°C | 0 | 0.29 (2.1) | 0.57 (4.1) | 0.14 | 0.00 | 0.00 | 1.0 | 36 | Rock salt | 45 × | $3 \times 10^3$ | × | ◎ | Absence |
| Comparative Example 2 | Li0.50Mg0.25Ti0.25O | No | 800°C | 0 | 0.50 (2.0) | 0.25 (1.0) | 0.25 | 0.00 | 0.00 | 1.0 | 16 | Rock salt | 43 × | $5 \times 10^3$ × | × | ◎ | Absence |
| Comparative Example 3 | Li0.65Mg0.03Ti0.32O | No | 800°C | 0 | 0.65 (2.0) | 0.03 (0.1) | 0.32 | 0.00 | 0.00 | 1.0 | 0 | Layered rock salt | 45 × | $6 \times 10^3$ × | × | ◎ | Absence |
| Comparative Example 4 | Li0.47Mg0.26Ti0.26O | No | 800°C | 0 | 0.47 (1.8) | 0.26 (1.0) | 0.26 | 0.00 | 0.00 | 1.0 | 17 | Spinel + rock salt | 48 × | $2 \times 10^3$ × | × | ◎ | Absence |
| Comparative Example 5 | Li0.29Mg0.57Ti0.14O | Li3BO3 | 800°C | 0 | 0.29 (2.1) | 0.57 (4.1) | 0.14 | 0.00 | 0.00 | 1.0 | 36 | Rock salt | 40 × | $1 \times 10^3$ × | × | ◎ | Absence |
| Comparative Example 6 | Al2O3 | LiBiO2 | 800°C | - | - | - | - | 0.66 | 0.005 | 1.0 | 0 | Corundum | 52 × | $8 \times 10^3$ × | × | × | Second phase |
| Example 1 | Li0.29Mg0.57Ti0.14O | LiBiO2 | 800°C | 0.007 | 0.29 (2.1) | 0.57 (4.1) | 0.14 | 0.00 | 0.005 | 1.0 | 35 | Rock salt | 2 ◎ | $<1 \times 10^{-1}$ ◎ | ◎ | ◎ | Both phases |
| Example 2 | Li0.50Mg0.25Ti0.25O | LiBiO2 | 800°C | 0.007 | 0.50 (2.0) | 0.25 (1.0) | 0.25 | 0.00 | 0.004 | 1.0 | 16 | Rock salt | 1 ◎ | $<1 \times 10^{-1}$ ◎ | ◎ | ◎ | Both phases |
| Example 3 | Li0.65Mg0.03Ti0.32O | LiBiO2 | 800°C | 0.007 | 0.65 (2.0) | 0.03 (0.1) | 0.32 | 0.00 | 0.002 | 1.0 | 2 | Layered rock salt | 5 ◎ | $<1 \times 10^{-1}$ ◎ | ◎ | ◎ | Both phases |
| Example 4 | Li0.47Mg0.26Ti0.26O | LiBiO2 | 800°C | 0.007 | 0.48 (1.8) | 0.26 (1.0) | 0.26 | 0.00 | 0.004 | 1.0 | 16 | Spinel + rock salt | 10 Δ | $2 \times 10^{-1}$ Δ | Δ | ◎ | Both phases |
| Example 5 | Li0.29Mg0.57Ti0.14O | Li3BiO3 | 800°C | 0.007 | 0.30 (2.1) | 0.57 (4.1) | 0.14 | 0.00 | 0.005 | 1.0 | 35 | Rock salt | 4 ◎ | $<1 \times 10^{-1}$ ◎ | ◎ | ◎ | Both phases |

(1) Reactivity with garnet type solid electrolyte. *: $\delta$ is a calculated value. **: The first phase, the second phase, or both phases thereof.

Comprehensive evaluation = comprehensive evaluation of low-temperature densification characteristics and water vapor barrier properties 1 (moisture resistance)

[Effect of Bi addition]

Comparison between Comparative Examples 1 to 4 and Examples 1 to 4 showed that when firing was performed at 800°C at which a side reaction between the electrode and the electrolyte could be suppressed only for the exterior substrate (oxide ceramic), the area porosity becomes significantly large, and densification did not proceed. As a result, it has been found that the WVTR becomes significantly large, and the moisture barrier properties, which are important properties of the exterior material, were significantly lowered. This is considered to be because moisture permeated through voids in the exterior. On the other hand, it has been found that the exterior material contained Bi, thereby significantly reducing the area porosity and significantly promoting the densification at the same firing temperature. It has been found that the moisture permeation amount was also significantly reduced, and the moisture barrier properties were significantly improved. In addition, it has been found that the addition of the present aid is effective in a material in which the crystal structure of the exterior has a rock salt, a layered rock salt, a spinel structure, or a mixed phase structure thereof. In addition, the measurement result of the WVTR2 of the sample of Example 1 by the MA method was $3 \times 10^{-4}$ (g/m$^2$/day), and the sample had excellent water vapor barrier properties.

From Comparative Example 6, when $Al_2O_3$ was used for the exterior composition for use, densification did not proceed when Bi was contained, and WVTR1 also showed a significantly large value. Therefore, it is found that the effect of the present invention is exhibited by a combination of an oxide containing Li, Mg, and M and a Bi-containing oxide (that is, an embodiment in which the oxide containing Li, Mg, and M further contains Bi). In addition, it is found that $Al_2O_3$ undergoes a side reaction with the garnet type solid electrolyte during firing, but the present material of the present embodiment does not undergo a side reaction with the garnet type solid electrolyte, and is thus promising as an exterior material used together with the solid electrolyte.

Comparison among Comparative Example 1, Comparative Example 5, and Example 1 showed that densification hardly proceeded when lithium borate $Li_3BO_3$ known as a firing aid was added. On the other hand, it is found that the addition of Bi functions significantly effectively for densification. This is considered to be because the ease of progress of liquid phase sintering of the exterior substrate greatly changes depending on the elements of the aid. From the present results, it has been found that in the present exterior substrate, Bi is an important additive element for promoting densification at a low temperature and exhibiting moisture barrier properties.

Comparison between Example 1 and Example 5 shows that although the form of adding Bi is different, high moisture barrier properties are exhibited due to the presence of Bi in the exterior ceramic.

[Table 5]

| | Exterior composition for use (Charge) | Aid | Firing temperature | Exterior ceramic chemical composition $Li_{\alpha 1}A_{\alpha 2}Mg_{\beta}M_{\gamma}Bi_xO_{\delta}$ | | | | | | | Mg content (mass%) | Crystal structure | Evaluation | | | | Presence of Bi ** |
| | | | | Bi/(Mg + M) ratio | $Li\alpha 1$ (Li/M) | $Mg\beta$ (Mg/M) | $M\gamma$ | $A\alpha 2$ | Bix | $\delta$* | | | Area porosity (%) | WVTR1 (g/m2/day) | Comprehensive evaluation | Reaction resistance (1) | |
| Example 6 | Li0.29Mg0.57Ti0.14O | LiBiO2 | 800°C | 0.02 | 0.29 (2.1) | 0.57 (4.1) | 0.14 | 0.00 | 0.001 | 1.0 | 36 | Rock salt | 7 ○ | <1×10-1 ◎ | ○ | ◎ | Both phases |
| Example 7 | Li0.29Mg0.57Ti0.14O | LiBiO2 | 800°C | 0.014 | 0.30 (2.1) | 0.57 (4.1) | 0.14 | 0.00 | 0.010 | 1.0 | 34 | Rock salt | 1 ◎ | <1×10-1 ◎ | ◎ | ◎ | Both phases |
| Example 8 | Li0.29Mg0.57Ti0.14O | LiBiO2 | 800°C | 0.030 | 0.31 (2.2) | 0.57 (4.1) | 0.14 | 0.00 | 0.021 | 1.0 | 32 | Rock salt | 1 ◎ | <1×10-1 ◎ | ◎ | ◎ | Both phases |
| Example 9 | Li0.29Mg0.57Zr0.14O | LiBiO2 | 800°C | 0.007 | 0.29 (2.1) | 0.57 (4.1) | 0.14 | 0.00 | 0.005 | 1.0 | 35 | Rock salt | 8 ○ | <1×10-1 ◎ | ○ | ◎ | Both phases |
| Example 10 | Li0.38Mg0.50Nb0.13O | LiBiO2 | 800°C | 0.007 | 0.38 (2.9) | 0.50 (3.8) | 0.13 | 0.00 | 0.004 | 1.0 | 28 | Rock salt | 2 ◎ | <1×10-1 ◎ | ◎ | ◎ | Both phases |
| Example 11 | Li0.33Mg0.53Zr0.07Ta0.07O | LiBiO2 | 800°C | 0.007 | 0.34 (2.6) | 0.53 (4.1) | 0.13 | 0.00 | 0.005 | 1.0 | 26 | Rock salt | 5 ◎ | <1×10-1 ◎ | ◎ | ◎ | Both phases |
| Example 12 | Li0.31Al0.06Mg0.50Ti0.13O | LiBiO2 | 800°C | 0.007 | 0.32 (2.5) | 0.50 (3.8) | 0.13 | 0.06 | 0.004 | 1.0 | 31 | Rock salt | 4 ◎ | <1×10-1 ◎ | ◎ | ◎ | Both phases |
| Example 13 | Li0.31Ga0.06Mg0.50Ti0.13O | LiBiO2 | 800°C | 0.007 | 0.32 (2.5) | 0.50 (3.8) | 0.13 | 0.06 | 0.004 | 1.0 | 29 | Rock salt | 6 ◎ | <1×10-1 ◎ | ◎ | ◎ | Both phases |
| Example 14 | Li0.27Zn0.07Mg0.53Ti0.13O | LiBiO2 | 800°C | 0.007 | 0.27 (2.1) | 0.53 (4.1) | 0.13 | 0.07 | 0.005 | 1.0 | 30 | Rock salt | 6 ◎ | <1×10-1 ◎ | ◎ | ◎ | Both phases |

(1) Reactivity with garnet type solid electrolyte. *: $\delta$ is a calculated value. **: The first phase, the second phase, or both phases **thereof.**

Comprehensive evaluation = comprehensive evaluation of low-temperature densification characteristics and water vapor barrier properties 1 (moisture resistance)

[Effect of amount of Bi added]

From Examples 6 to 8, it is found that the densification of the exterior material is promoted for a wide amount of Bi added.

[Effect of type of element of M]

From Examples 9 to 11, it is found that the effect of the present invention can be obtained when an element other than Ti is also used as M of the exterior substrate.

[Effect of type of element of A]

In addition, from Examples 12 to 14, it is found that the effect of the present invention can be obtained when the exterior substrate also contains a constituent element A other than Li, Mg, and M.

[SEM observation of surface]

A SEM photograph of the surface of the sintered body (exterior ceramic single plate) obtained in Example 1 is shown in FIG. 4 (magnification: 10,000).

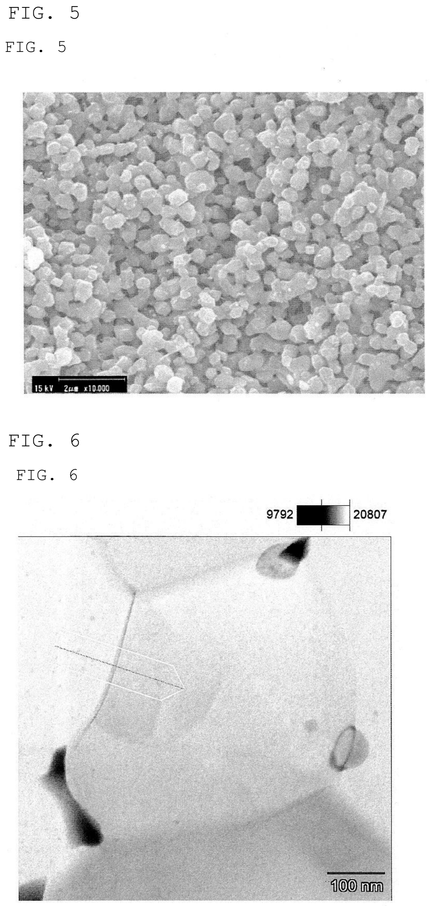

A SEM photograph of the surface of the sintered body (exterior ceramic single plate) obtained in Comparative Example 1 is shown in FIG. 5 (magnification: 10,000).

From the comparison of these photographs, it is found that the exterior substrate (oxide ceramic) grains are densified while growing due to the presence of Bi.

[TEM-EDX observation]

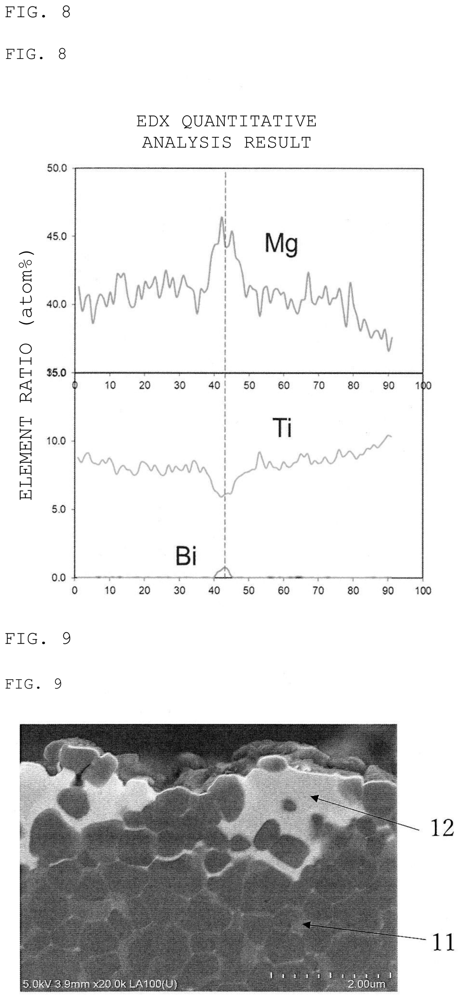

TEM-EDX observation of the sintered body (exterior ceramic single plate) obtained in Example 1 was performed. A TEM photograph of the sintered body (exterior ceramic single plate) obtained in Example 1 is shown in FIG. 6 (magnification: 300,000). The presence distribution of the Bi element in the TEM photograph shown in FIG. 6 is shown in FIG. 7. FIG. 8 shows the EDX quantitative analysis results for the arrow-indicated portion of the TEM photograph shown in FIG. 6.

TEM-EDX analysis (particularly FIGS. 7 and 8) showed that the Bi component was mainly present at the grain boundary. Specifically, it is found that Bi is concentrated at the grain boundary (or the grain boundary and the grain boundary vicinity portion) of the oxide ceramic. It is considered that the Bi component formed a liquid phase during firing, causing the liquid phase sintering to proceed and densification at a low temperature to proceed.

In addition, it has been found that the grain boundary component may partially include constituent elements (for example, M such as Li, Mg, and Ti) of the exterior substrate in addition to Bi.

Table 1 shows that the presence of the Bi component at the grain boundary does not adversely affect the moisture permeability.

[SEM observation of section]

A SEM photograph of the section of the sintered body (exterior ceramic single plate) obtained in Example 2 is shown in FIG. 9 (magnification: 20,000).

Depending on the composition of the material, Bi is not only present as the second phase at the grain boundary 12 as shown in FIG. 9 (and FIG. 7), but also may be present as a solid solution in the exterior substrate (particularly, the main phase (first phase) 11). This is considered to be because of diffusion of Bi partially into the exterior substrate in the process of densification. In either case, sufficient moisture barrier properties can be obtained. In FIG. 9, specifically, Bi is apparently solid-solved at the vicinity of the grain boundary (second phase) in the main phase (first phase) although Bi is solid-solved in the main phase (first phase) 11.

In addition, Comparison of Examples 1 to 3 and 5 to 14 with Example 4 showed that when the following condition $A^1$ was satisfied, the low-temperature densification characteristics and the moisture resistance were further improved, and the evaluation results of all these characteristics were at least "∘". In this case, the moisture resistance and the resistance to reaction with the solid electrolyte are also sufficiently excellent.

· Condition A1: The main phase in the oxide ceramic has only a rock salt type crystal structure or a layered rock salt type crystal structure.

**EP 4 715 972 A1**

Further, comparison of Examples 1 to 3, 5, 7 to 8, and 10 to 14 with Examples 4, 6, and 9 showed that when the following condition A1 was satisfied, the low-temperature densification characteristics and the moisture resistance were further improved, and the evaluation results of all these characteristics were "◎". In this case, the moisture resistance and the resistance to reaction with the solid electrolyte are also sufficiently excellent.

· Condition B1: The main phase in the oxide ceramic has only a rock salt type crystal structure or a layered rock salt type crystal structure.
· Condition B2: The element (M) is at least one selected from Ti, Ta, and Nb, or two selected from Zr and Ta.
· Condition B3: The oxide ceramic has the following molar ratio.

$$0.004 \leq Bi/(Mg + M) \leq 0.060.$$

In Tables 4 and 5, the "exterior ceramic chemical composition" indicates the final composition.
In Tables 4 and 5, the "used exterior composition" indicates the charging ratio (molar ratio) of the raw materials to be used.

[Experimental Example 2]

In Experimental Example 1, it has been shown that the produced exterior substrate (oxide ceramic) and exterior ceramic single plate were sufficiently excellent in low-temperature densification characteristics and moisture resistance, but in these evaluation methods, the oxide ceramic itself or a fired body (single plate) produced using the oxide ceramic was targeted for evaluation. Therefore, from Experimental Example 1 and the results thereof, it is clear that when the oxide ceramic is also used for the insulating portion, the oxide ceramic is sufficiently excellent in low-temperature densification characteristics and moisture resistance.
In Experimental Example 1, it has been also shown that the produced exterior substrate (oxide ceramic) and exterior ceramic single plate were sufficiently excellent in electron conductivity (insulating properties) and reaction resistance (resistance to reaction with solid electrolyte), but in these evaluation methods, the oxide ceramic itself or a fired body (single plate) produced using the oxide ceramic was targeted for evaluation. Therefore, from Experimental Example 1 and the results thereof, it is clear that when the oxide ceramic is also used for the insulating portion, the oxide ceramic is sufficiently excellent in electron conductivity (insulating properties) and reaction resistance (reaction resistance with a solid electrolyte).

INDUSTRIAL APPLICABILITY

The solid-state battery of the present invention can be used in various fields where use of a battery or storage of electricity is assumed. By way of example only, the solid-state battery of the present invention can be used in the field of electronics mounting. The fixed battery according to an embodiment of the present invention can also be used in the fields of electricity, information, and communication in which mobile devices and the like are used (for example, electric and electronic equipment fields or mobile equipment fields including mobile phones, smartphones, smartwatches, notebook computers, and small electronic machines such as digital cameras, activity meters, arm computers, electronic papers, wearable devices, RFID tags, card-type electronic money, and smartwatches), home and small industrial applications (for example, the fields of electric tools, golf carts, and home, nursing, and industrial robots), large industrial applications (for example, the fields of forklift, elevator, and harbor crane), transportation system fields (for example, the fields of hybrid vehicles, electric vehicles, buses, trains, power-assisted bicycles, electric two-wheeled vehicles, and the like), power system applications (for example, fields such as various types of power generation, road conditioners, smart grids, and household power storage systems), medical applications (medical device fields such as hearing aid buds), pharmaceutical applications (fields such as dosage management systems), IoT fields, space and deep sea applications (for example, fields such as space probes and submersibles), and the like.

DESCRIPTION OF REFERENCE SYMBOLS

1: Battery element
1a: Electrode layer (positive electrode layer and negative electrode layer)
1b: Solid electrolyte layer
1c: Insulating portion

2: Exterior portion
2a: Main surface exterior portion
2b: Side surface exterior portion
3: External electrode (positive electrode side external electrode and negative electrode side external electrode)

**Claims**

1. A solid-state battery, comprising:

   an exterior portion; and an insulating portion, wherein
   at least one of the exterior portion and the insulating portion includes an oxide ceramic including:

   Li (lithium);
   Mg (magnesium);
   one or more elements (M) selected from the group consisting of Group 4 and Group 5 elements; and
   Bi (bismuth).

2. The solid-state battery according to claim 1, wherein the oxide ceramic has a following molar ratio:

$$0 < Bi/ (Mg + M) \le 0.100.$$

3. The solid-state battery according to claim 1 or 2, wherein the oxide ceramic has a following molar ratio:

$$0 < Mg/M \le 9.8.$$

4. The solid-state battery according to any one of claims 1 to 3, wherein the oxide ceramic has a following molar ratio:

$$0 < Li/M \le 5.$$

5. The solid-state battery according to any one of claims 1 to 4, wherein the oxide ceramic has a rock salt type crystal structure, a spinel type crystal structure, a layered rock salt type crystal structure, or a mixed phase structure thereof.

6. The solid-state battery according to any one of claims 1 to 5, wherein the element (M) is at least one selected from Ti, Zr, Hf, Ta, and Nb.

7. The solid-state battery according to any one of claims 1 to 6, wherein a main phase in the oxide ceramic has only a rock salt type crystal structure or a layered rock salt type crystal structure.

8. The solid-state battery according to any one of claims 1 to 7, wherein

   a main phase in the oxide ceramic has only a rock salt type crystal structure or a layered rock salt type crystal structure,
   the element (M) is at least one selected from Ti, Ta, and Nb, or two selected from Zr and Ta, and
   the oxide ceramic has a following molar ratio:

$$0.004 \le Bi/ (Mg + M) \le 0.060.$$

9. The solid-state battery according to any one of claims 1 to 8, wherein

   the oxide ceramic has a grain boundary, and
   the grain boundary includes at least one element selected from the group consisting of Mg and M in addition to the Bi.

10. The solid-state battery according to any one of claims 1 to 9, wherein

the oxide ceramic has a grain boundary, and
the grain boundary includes the Li in addition to the Bi.

11. The solid-state battery according to any one of claims 1 to 10, wherein

the oxide ceramic has a grain boundary and a grain boundary vicinity portion close to the grain boundary, and
the Bi is concentrated at the grain boundary and/or in the vicinity of the grain boundary.

12. The solid-state battery according to any one of claims 1 to 11, wherein the Bi is present at least at a grain boundary of the oxide ceramic.

13. The solid-state battery according to any one of claims 1 to 12, wherein

the solid-state battery further includes a battery element including one or more battery constituent units including a positive electrode layer and a negative electrode layer facing each other and a solid electrolyte layer disposed between the positive electrode layer and the negative electrode layer, and a positive electrode side external electrode and a negative electrode side external electrode for drawing electric power generated in the battery element to the outside,
the exterior portion is a member that covers the outside of the battery element, and
the insulating portion includes an insulating portion disposed between the positive electrode layer and the negative electrode side external electrode, and an insulating portion disposed between the negative electrode layer and the positive electrode side external electrode.

14. The solid-state battery according to claim 13, wherein one or more layers selected from the positive electrode layer, the negative electrode layer, and the solid electrolyte layer include at least one solid electrolyte selected from a garnet type solid electrolyte, a LISICON type solid electrolyte, and a perovskite type solid electrolyte.

15. The solid-state battery according to claim 14, wherein the one or more layers include a garnet type solid electrolyte or a LISICON type solid electrolyte.

16. The solid-state battery according to claim 14, wherein the one or more layers include a garnet type solid electrolyte.

17. The solid-state battery described in any one of claims 13 to 16, wherein the exterior portion and the insulating portion have a layer form.

18. The solid-state battery according to any one of claims 13 to 17, wherein

the exterior portion is in direct contact with a surface of the battery element, and
the insulating portion is disposed between two solid electrolyte layers and is in direct contact with each surface of the two solid electrolyte layers.

19. The solid-state battery according to any one of claims 13 to 18, wherein

the exterior portion is an integrally sintered body formed of a surface of the battery element and sintered bodies, and
the insulating portion is an integrally sintered body formed of a surface of each of the two solid electrolyte layers and sintered bodies.

FIG. 1

FIG. 1

FIG. 2

FIG. 2

FIG. 3

FIG. 3

FIG. 4

FIG. 4

FIG. 5

FIG. 5

FIG. 6

FIG. 6

FIG. 7

FIG. 7

FIG. 8

FIG. 8

EDX QUANTITATIVE
ANALYSIS RESULT

FIG. 9

FIG. 9

## INTERNATIONAL SEARCH REPORT

| International application No. |
| --- |
| **PCT/JP2024/028628** |

**A.    CLASSIFICATION OF SUBJECT MATTER**

*H01M 50/117*(2021.01)i; *C01G 23/00*(2006.01)i; *C01G 29/00*(2006.01)i; *C04B 35/462*(2006.01)i; *H01M 10/052*(2010.01)i; *H01M 10/0562*(2010.01)i; *H01M 50/11*(2021.01)i; *H01M 50/138*(2021.01)i; *H01M 50/141*(2021.01)i

FI:    H01M50/117; C01G23/00 C; C01G29/00; C04B35/462; H01M10/052; H01M10/0562; H01M50/11; H01M50/138; H01M50/141

According to International Patent Classification (IPC) or to both national classification and IPC

**B.    FIELDS SEARCHED**

Minimum documentation searched (classification system followed by classification symbols)

H01M50/117; C01G23/00; C01G29/00; C04B35/462; H01M10/052; H01M10/0562; H01M50/11; H01M50/138; H01M50/141

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2017-088420 A (NGK SPARK PLUG CO., LTD.) 25 May 2017 (2017-05-25) paragraphs [0012], [0067]-[0068] | 1-19 |
| A | KR 10-2022-0137426 A (SAMSUNG SDI CO., LTD.) 12 October 2022 (2022-10-12) paragraphs [0039]-[0048] | 1-19 |
| A | JP 2007-063076 A (TDK CORPORATION) 15 March 2007 (2007-03-15) paragraphs [0046], [0050]-[0051] | 1-19 |
| P, A | WO 2024/096101 A1 (SUMITOMO CHEMICAL COMPANY, LIMITED) 10 May 2024 (2024-05-10) | 1-19 |

☐ Further documents are listed in the continuation of Box C.        ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **08 October 2024** | **22 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/028628**

| Patent document cited in search report | | | Publication date (day/month/year) | Patent family member(s) | Publication date (day/month/year) |
|---|---|---|---|---|---|
| JP | 2017-088420 | A | 25 May 2017 | (Family: none) | |
| KR | 10-2022-0137426 | A | 12 October 2022 | US 2022/0328809 A1 paragraphs [0040]-[0045] EP 4068426 A1 | |
| JP | 2007-063076 | A | 15 March 2007 | (Family: none) | |
| WO | 2024/096101 | A1 | 10 May 2024 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019167856 A
- JP 2007173212 A
- JP 2003092092 A
- WO 2019181909 A

**Non-patent literature cited in the description**

- **A.R. WEST**. *J. solid state chem.*, 1972, vol. 4, 20-28